(19) Europäisches Patentamt
European Patent Office
Office européen des brevets

(11) Veröffentlichungsnummer: **0 103 156**
**B1**

(12) # EUROPÄISCHE PATENTSCHRIFT

(45) Veröffentlichungstag der Patentschrift: **08.10.86**

(51) Int. Cl.[4]: **C 09 B 62/095,** C 09 B 62/515, D 06 P 3/66, D 06 P 3/10

(21) Anmeldenummer: **83107778.9**

(22) Anmeldetag: **08.08.83**

(54) **Wasserlösliche Kupferkomplex-Disazoverbindungen, Verfahren zu ihrer Herstellung und ihre Verwendung als Farbstoffe.**

(30) Priorität: **11.08.82 DE 3229799**

(43) Veröffentlichungstag der Anmeldung: **21.03.84 Patentblatt 84/12**

(45) *Bekanntmachung des Hinweises auf die Patenterteilung:* **08.10.86 Patentblatt 86/41**

(84) Benannte Vertragsstaaten: **BE CH DE FR GB IT LI**

(56) Entgegenhaltungen: **FR - A - 2 430 442**

***Die Akte enthält technische Angaben, die nach dem Eingang der Anmeldung eingereicht wurden und die nicht in dieser Patentschrift enthalten sind.***

(73) Patentinhaber: **HOECHST AKTIENGESELLSCHAFT, Postfach 80 03 20, D-6230 Frankfurt am Main 80 (DE)**

(72) Erfinder: **Meininger, Fritz, Dr., Loreleistrasse 7, D-6230 Frankfurt am Main (DE)**
Erfinder: **Steuernagel, Hans Helmut, Dr., An den Römergärten 1, D-6233 Kelkheim (Taunus) (DE)**

**EP 0 103 156 B1**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

ACTORUM AG

**Beschreibung**

Die vorliegende Erfindung liegt auf dem Gebiet der faserreaktiven Kupferkomplex-Disazofarbstoffe.

Aus der deutschen Offenlegungsschrift 14 19 852 ist von Beispiel 43 ein Kupferkomplex-Disazofarbstoff mit einem faserreaktiven 2-Chlor-4- [3'- (β-sulfatoäthylsulfonyl)- phenylamino] -1,3,5-triazin-6-yl- amino-Rest bekannt, der jedoch gewisse Mängel zeigt.

Mit der vorliegenden Erfindung wurden nunmehr neue, vorteilhafte wasserlösliche Kupferkomplex-Disazoverbindungen gefunden, die der allgemeinen Formel (1)

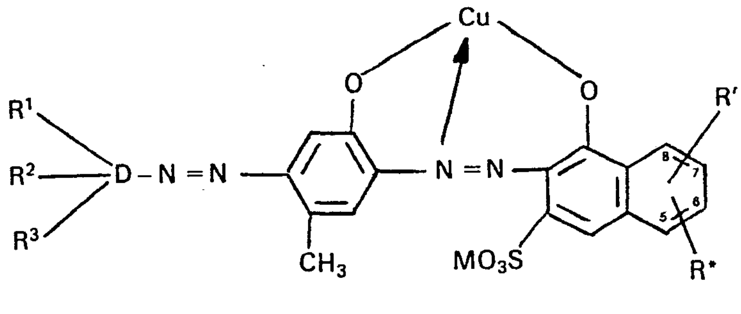

(1)

entsprechen; in dieser Formel bedeuten:

D ist ein Benzolkern, dessen Substituenten

$R^1$ eine Sulfogruppe (entsprechend der allgemeinen Formel $-SO_3M$ mit M der nachstehenden Bedeutung) oder eine Carboxygruppe (entsprechend der allgemeinen Formel $-COOM$ mit M der nachstehenden Bedeutung),

$R^2$ ein Wasserstoffatom, eine Sulfogruppe, eine Carboxygruppe, eine Alkylgruppe von 1 bis 4 C-Atomen, eine Alkoxygruppe von 1 bis 4 C-Atomen, ein Chloratom, ein Bromatom, eine Alkanoylaminogruppe von 2 bis 5 C-Atomen oder eine Benzoylaminogruppe und

$R^3$ ein Wasserstoffatom, eine Alkylgruppe von 1 bis 4 C-Atomen, eine Alkoxygruppe von 1 bis 4 C-Atomen oder ein Chloratom darstellen, oder

D ist ein Naphthalinkern, dessen Substituenten

$R^1$ für eine Sulfogruppe und

$R^2$ und $R^3$ jedes für ein Wasserstoffatom oder eine Sulfogruppe stehen, wobei

$R^1$, $R^2$ und $R^3$ in allen Fällen zueinander gleiche oder voneinander verschiedene Bedeutungen besitzen können;

M ist ein Wasserstoffatom oder das Äquivalent eines Alkali- oder Erdalkalimetalls oder eines dreiwertigen Metalls der dritten Hauptgruppe, vorzugsweise Natrium oder Kalium oder das Äquivalent des Calciums;

R' ist ein Wasserstoffatom oder eine Sulfogruppe, die in 5-, 6-, 7- oder 8-Stellung des Naphtholrestes gebunden sein kann;

R* ist eine in 5-, 6-, 7- oder 8-Stellung des Naphtholrestes gebundene Gruppe der allgemeinen Formel (2)

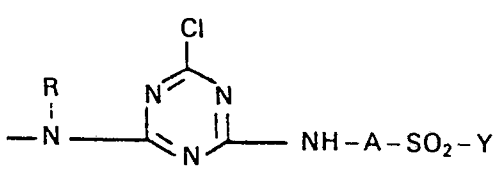

(2)

in welcher

R ein Wasserstoffatom oder eine Alkylgruppe von 1 bis 6 C-Atomen, bevorzugt 1 bis 4 C-Atomen ist, die durch eine Hydroxygruppe, eine Sulfogruppe oder eine acylierte Hydroxygruppe, wie beispielsweise eine Sulfatogruppe, eine Phosphatogruppe, eine Alkanoyloxygruppe von 2 bis 5 C-Atomen, wie die Acetyloxygruppe, substituiert sein kann,

A ein Phenylenrest ist, der durch einen oder zwei Substituenten aus der Gruppe Alkyl von 1 bis 4 C-Atomen, Alkoxy von 1 bis 4 C-Atomen, Chlor, Brom, Carboxy und Sulfo substituiert sein kann, oder ein Naphthylenrest ist, der durch eine Sulfogruppe substituiert sein kann, und

Y für die Vinylgruppe oder eine Gruppe der Formel $-CH_2-CH_2-Z$ steht, in welcher

Z einen alkalisch eliminierbaren Substituenten bedeutet, wie beispielsweise ein Chloratom, die Acetyloxygruppe, eine Thiosulfatogruppe (entsprechend der allgemeinen Formel $-S-SO_3M$ mit M der obengenannten Bedeutung) eine Phosphatogruppe (entsprechend der allgemeinen Formel $-OPO_3M_2$ mit M der obengenannten Bedeutung) und bevorzugt eine Sulfatogruppe(entsprechend der allgemeinen Formel $-OSO_3M$ mit M der obengenannten Bedeutung),

ausgenommen jedoch Verbindungen der allgemeinen Formel (1), in denen gleichzeitig D einen Benzolkern bedeutet und $R^1$ und $R^2$ beide paraständig zueinander stehende Sulfogruppen sind und R' eine in 5-Stellung des Naphtholrestes befindliche Sulfogruppe und R* eine in 6-Stellung des Naphtholrestes befindliche Gruppe der allgemeinen Formel (2) bedeuten.

Bevorzugt steht die Gruppe der allgemeinen Formel (2) in 6- und 8-Stellung des Naphtholrestes. Sofern diese Gruppe (2) in 6-Stellung des Naphtholrestes gebunden ist, steht R' bevorzugt in 5-Stellung des Naphtholrestes gebunden, und sofern diese Gruppe (2) in 8-Stellung des Naphtholrestes gebunden ist, bedeutet R' bevorzugt eine in 6-Stellung des Naphtholrestes gebundene Sulfogruppe.

Von den erfindungsgemässen Kupferkomplex-Disazoverbindungen sind insbesondere diejenigen bevorzugt, in welchen D den Benzolkern bedeutet, dessen Substituenten $R^1$ eine Sulfo-

gruppe oder eine Carboxygruppe, $R^2$ ein Wasserstoffatom, eine Methylgruppe, eine Methoxygruppe, ein Chloratom, eine Acetylaminogruppe oder eine Sulfogruppe und $R^3$ ein Wasserstoffatom, Eine Methylgruppe, eine Methoxygruppe oder ein Chloratom bedeuten, wobei $R^1$, $R^2$ und $R^3$ zueinander gleich oder voneinander verschieden sein können, oder in welchen D einen Naphthalinkern darstellt, dessen Substituenten $R^1$ und $R^2$ jeder eine Sulfogruppe bedeuten und $R^3$ ein Wasserstoffatom ist.

Als bevorzugt können weiterhin solche erfindungsgemässen Verbindungen hervorgehoben werden, die den allgemeinen Formeln (1a), (1b) und (1c)

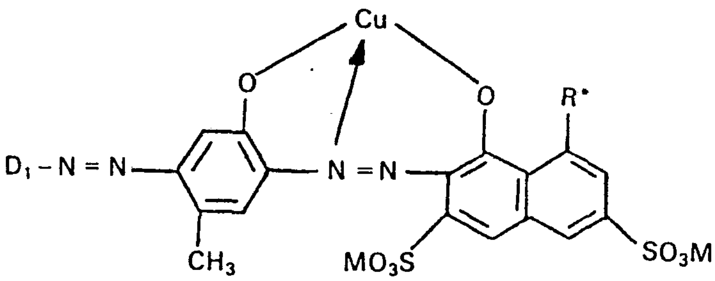

(1a)

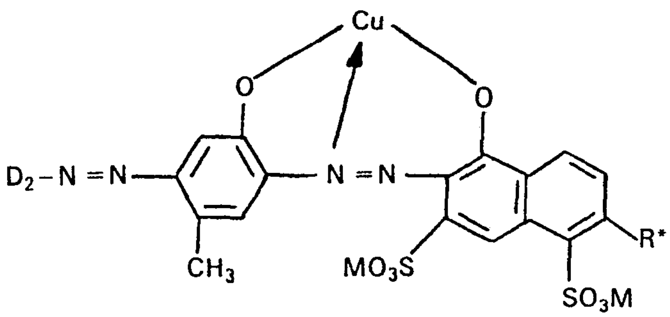

(1b)

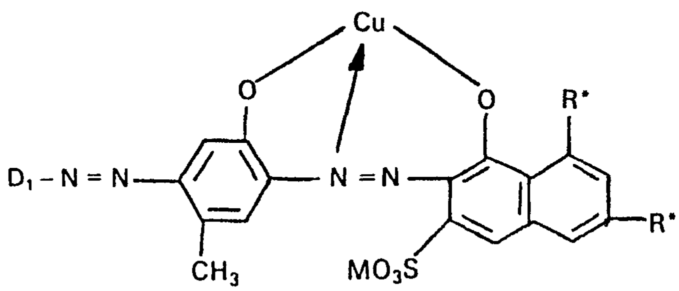

(1c)

entsprechen, in welchen M und R* die oben genannten, insbesondere bevorzugten Bedeutungen haben und $D_1$ für den Phenylrest steht, der durch eine Carboxygruppe oder eine Sulfogruppe substituiert ist oder der durch eine Sulfogruppe und eine Methyl-, Methoxy-, Carboxy- oder Acetylaminogruppe oder ein Chloratom substituiert ist, oder $D_1$ den 2,4-Disulfo-phenyl- oder den 3,5-Disulfo-phenyl- oder den 2,5-Disulfo-phenyl-Rest oder einen Disulfonaphthyl- oder Trisulfonaphthyl-Rest bedeutet und $D_2$ den Phenylrest darstellt, der durch eine Carboxygruppe oder eine Sulfogruppe substituiert ist oder der durch eine Sulfogruppe und eine Methyl-, Methoxy-, Carboxy- oder Acetylaminogruppe oder ein Chloratom substituiert ist, oder $D_2$ einen Disulfonaphthyl- oder Trisulfonaphthyl- oder den 2,4-Disulfophenyl- oder den 3,5-Disulfo-phenyl-Rest bedeutet.

Des weiteren sind diejenigen Verbindungen der allgemeinen Formel (1) bevorzugt, in welchen Y für die Vinylgruppe und insbesondere bevorzugt für eine β-Sulfatoäthyl-Gruppe steht.

Die neuen Kupferkomplex-Disazoverbindungen der allgemeinen Formel (1) können in Form der freien Säure und in Form ihrer Salze vorliegen. Bevorzugt sind sie in Form der Salze, insbesondere der Alkali- und Erdalkalimetallsalze, wie insbesondere der Natrium-, Kalium- und Calciumsalze. Sie finden bevorzugt in Form der Salze, vorzugsweise Alkalimetallsalze, Verwendung zum Färben und Bedrucken von hydroxy- und/oder carbonamidgruppenhaltigen Materialien.

Die vorliegende Erfindung betrifft weiterhin Verfahren zur Herstellung der erfindungsgemässen Kupferkomplex-Disazoverbindungen. Diese sind dadurch gekennzeichnet, dass man 2,4,6-Trichlor-1,3,5-triazin (Cyanurchlorid) in beliebiger Reihenfolge mit einer aromatischen Aminoverbindung der allgemeinen Formel (3)

$$H_2N{-}A{-}SO_2{-}Y \qquad (3)$$

in welcher A und Y die oben angegebenen Bedeutungen haben, und mit einer Amino-Disazoverbindung der allgemeinen Formel (4)

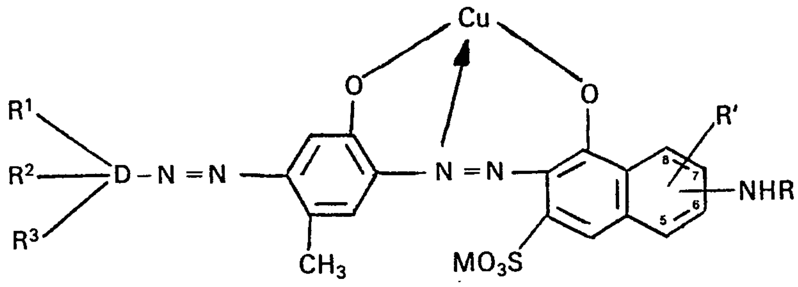

(4)

in welcher, D, $R^1$, $R^2$, $R^3$, R', R und M die oben genannten Bedeutungen besitzen, ausgenommen mit Verbindungen der allgemeinen Formel (4), in welcher gleichzeitig D einen Benzolkern bedeutet und $R^1$ und $R^2$ beide zueinander paraständig stehende Sulfogruppen und R' eine in 5-Stellung des Naphtholrestes befindliche Sulfogruppe darstellen und die Aminogruppe –NHR in 6-Stellung des Naphtholrestes gebunden ist, umsetzt oder dass man eine Disazoverbindung der allgemeinen Formel (5)

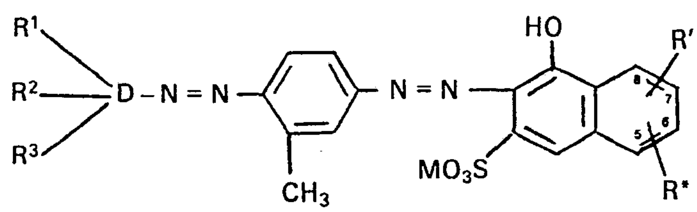

(5)

in welcher D, $R^1$, $R^2$, $R^3$, R', $R^*$ und M die oben genannten Bedeutungen haben, ausgenommen jedoch Disazoverbindungen der allgemeinen Formel (5), in welchen gleichzeitig D einen Benzolkern, $R^1$ und $R^2$ beide zueinander para-ständige Sulfogruppen, R' eine in 5-Stellung des Naphtholrestes befindliche Sulfogruppe und $R^*$ eine in 6-Stellung befindliche Gruppe der allgemeinen Formel (2) bedeuten, mit einer kupferabgebenden Verbindung in Gegenwart eines oxidierend wirkenden Mittels nach an und für sich bekannten und üblichen Verfahrensweisen der oxidierenden Kupferung zur erfindungsgemässen Kupferkomplex-Disazoverbindung umsetzt.

So erfolgt die oxidierende Kupferung der Ausgangsverbindungen der allgemeinen Formel (5) in die Verbindungen der allgemeinen Formel (1) beispielsweise in wässrigem Medium bei einer Temperatur zwischen 0 und 60 °C, vorzugsweise zwischen 20 und 40 °C, bei einem pH-Wert zwischen 4 und 6, vorzugsweise zwischen 4,8 und 5,4. Als oxidierend wirkendes Mittel wird vorzugsweise Wasserstoffsuperoxid verwendet.

Kupferabgebende Mittel sind beispielsweise Kupfersulfat, Kupferacetat, Kupfercarbonat oder Kupferkomplex-Verbindungen der Alkalisalze von aliphatischen Hydroxycarbonsäuren, wie der Zitronensäure, der Milchsäure, der Glykolsäure oder der Weinsäure.

Die Umsetzung des Cyanurchlorids mit einer Aminoverbindung der allgemeinen Formel (3) oder mit einer Aminodisazoverbindung der allgemeinen Formel (4) zu einer Dichlor-triazinylamino-Verbindung in der ersten Kondensationsstufe erfolgt in an und für sich üblicher und bekannter Weise solcher Umsetzungen zwischen Cyanurchlorid und aromatischen Aminoverbindungen. So kann sie in organischem oder wässrig-organischem Medium durchgeführt werden; vorzugsweise erfolgt die Umsetzung in wässrigem Medium unter Zusatz eines säurebindenden Mittels, wie eines Alkali- oder Erdalkalicarbonats, eines Alkali- oder Erdalkalihydrogencarbonats oder -hydroxids oder eines Alkaliacetats oder Mischungen derselben, wobei die Alkali- und Erdalkalimetalle vorzugsweise Natrium, Kalium und Calcium sind, bei einer Temperatur zwischen −10 °C und +40 °C, vorzugsweise unterhalb +30 °C, insbesondere bei einer Temperatur zwischen 0 und 10 °C, und bei einem pH-Wert zwischen 1,0 und 6,8. Als säurebindende Mittel können auch tertiäre Amine, wie beispielsweise Pyridin oder Triäthylamin oder Chinolin, verwendet werden.

Der Austausch des zweiten Chloratomes des in der ersten Stufe gebildeten primären Kondensationsproduktes der allgemeinen Formel (6) bzw. (7).

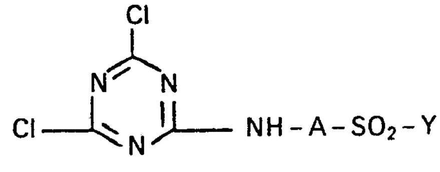

(6)

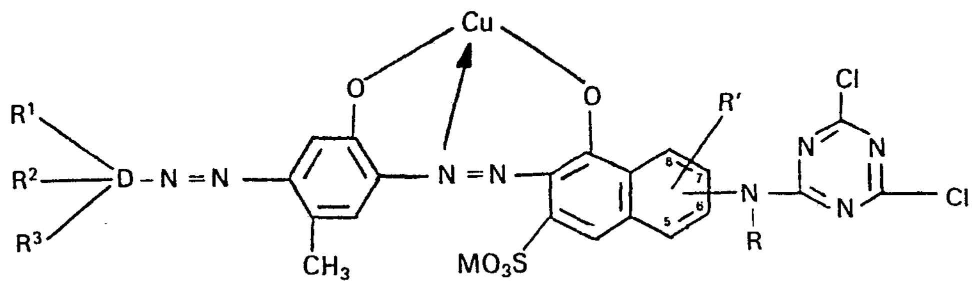

(7)

in welchen D, $R^1$, $R^2$, $R^3$, R′, M, R, A und Y die oben genannten Bedeutungen haben, durch Umsetzung in der zweiten Kondensationsstufe mit einer aromatischen Aminoverbindung der allgemeinen Formel (4) bzw. der allgemeinen Formel (3) zu den erfindungsgemässen Kupferkomplex-Disazoverbindungen erfolgt ebenso in an und für sich üblicher und bekannter Verfahrensweise, so beispielsweise in organischem oder wässrig-organischem Medium, vorzugsweise jedoch in wässrigem Medium, wobei erforderlichenfalls ein säurebindendes Mittel, wie eines der oben angegebenen, zugesetzt werden kann. Diese zweite Kondensationsreaktion wird vorzugsweise bei einer Temperatur zwischen 10 und 60 °C, insbesondere bevorzugt zwischen 20 und 50 °C, und bei einem pH-Wert zwischen 2 und 9, insbesondere zwischen 3,0 und 8,0 ausgeführt.

Die als Ausgangsverbindungen dienenden Kupferkomplex-Aminodisazoverbindungen der allgemeinen Formel (4) können in an und für sich bekannter Verfahrensweise beispielsweise hergestellt werden, indem man eine Disazoverbindung der allgemeinen Formel (8)

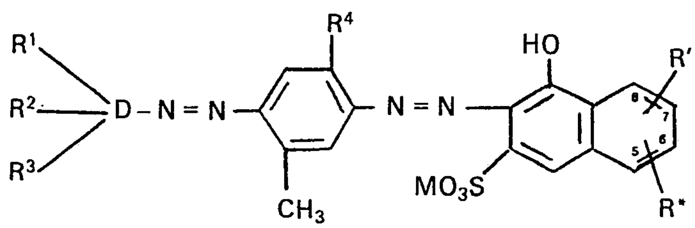

(8)

in welcher D, $R^1$, $R^2$, $R^3$, R′ und M die oben genannten Bedeutungen haben und $R^4$ für eine Alkoxygruppe von 1 bis 4 C-Atomen oder für ein Wasserstoffatom steht und $R^+$ eine Aminogruppe der Formel –NHR mit R der oben genannten Bedeutung oder eine Gruppe der Formel –NR–CO–$R^5$ darstellt, worin R die oben genannte Bedeutung besitzt und $R^5$ einen unsubstituierten oder substituierten Kohlenwasserstoffrest bedeutet, mit einem kupferabgebenden Mittel, gegebenenfalls unter Erhitzen und unter Druck und erforderlichenfalls unter Zusatz von Ammoniak oder einer aliphatischen, cycloaliphatischen oder heterocyclischen Base und im Falle von $R^4$ gleich Wasserstoff unter Zusatz eines oxidierend wirkenden Mittels, behandelt und anschliessend in der gebildeten Kupferkomplex-Disazoverbindung mit einer Gruppe der oben genannten Formel –NR–CO–$R^5$ diese Gruppe in an und für sich üblicher Weise zur Aminogruppe –NHR hydrolysiert.

Die Disazoverbindungen der allgemeinen Formel (8) können wiederum gemäss bekannter Verfahrensweise beispielsweise durch Kupplung eines diazotierten Amins der allgemeinen Formel (9)

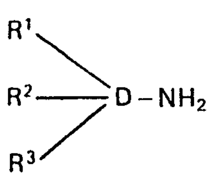

(9)

in welcher D, $R^1$, $R^2$ und $R^3$ die oben genannten Bedeutungen haben, mit einer Aminoverbindung der allgemeinen Formel (10)

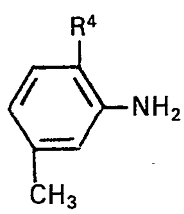

(10)

in welcher $R^4$ die oben genannte Bedeutung besitzt, und Diazotierung der gebildeten Aminoazoverbindung der allgemeinen Formel (11)

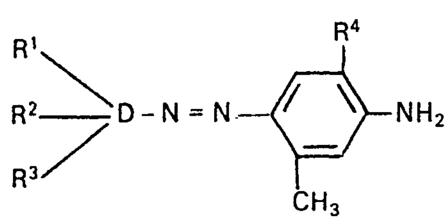

(11)

in welcher D, $R^1$, $R^2$, $R^3$ und $R^4$ die oben genannten Bedeutungen haben, und Kupplung mit einer Naphtholverbindung der allgemeinen Formel (12)

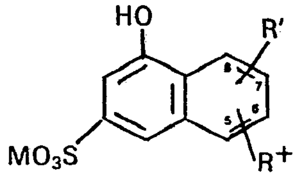

(12)

in welcher M, R′ und $R^+$ die oben genannten Bedeutungen haben, erhalten werden.

In analoger Weise lassen sich die Ausgangsverbindungen der allgemeinen Formel (5) herstellen, indem man beispielsweise eine Aminoazoverbindung der allgemeinen Formel (11) diazotiert und mit einer Naphtholverbindung der allgemeinen Formel (13)

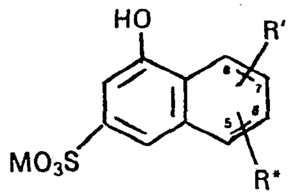

(13)

in welcher M, R′ und $R^*$ die oben genannten Bedeutungen besitzen, kuppelt.

Die Überführung der als Ausgangsverbindungen dienenden metallfreien Disazoverbindungen der allgemeinen Formel (8), in welchen $R^4$ eine Alkoxygruppe bedeutet, in die entsprechende Kupferkomplex-Disazoverbindungen, beispielsweise der allgemeinen Formel (4), wird beispielsweise so durchgeführt, dass man diese Verbindung der allgemeinen Formel (8) in wässrigem Medium bei einem pH-Wert zwischen 3 und 7 oder aber bei einem pH-Wert zwischen 7 und 9,5 unter Zusatz von Ammoniak oder einer aliphatischen, cycloaliphatischen oder heterocyclischen Base bei einer Temperatur zwischen 20 und 130 °C, vorzugsweise zwischen 80 und 125 °C, gegebenenfalls unter Rückflusskühlung oder im geschlossenen Gefäss, mit einem kupferabgebenden Mittel, wie beispielsweise einem der oben genannten kupferabgebenden Verbindungen, umsetzt.

Die Überführung der Ausgangsverbindungen der allgemeinen Formel (8) mit $R^4$ gleich Wasserstoff erfolgt durch oxidierende Kupferung in analoger Weise wie anfangs für die oxidierende Kupferung der Disazoverbindungen der allgemeinen Formel (5) in die erfindungsgemässen Kupferkomplex-Disazoverbindungen beschrieben.

Von den obengenannten verschiedenen Ausgangsverbindungen, die zur Synthese der erfindungsgemässen Kupferkomplex-Disazoverbindungen der allgemeinen Formel (1) dienen können, sind beispielsweise die folgenden besonders erwähnenswert:

Von den Aminoverbindungen entsprechend der allgemeinen Formel (9):

1-Aminobenzol -2-sulfonsäure, 1-Aminobenzol -3- und -4-sulfonsäure, 2-Amino-4- sulfobenzoesäure, 2-Amino-5- sulfobenzoesäure, 4-Amino-2-sulfo-benzoesäure, 4-Amino-toluol-2- und -3-sulfonsäure, 2-Amino-toluol-4- und -5-sulfonsäure, 2-Amino-toluol -4- carbonsäure, Anthranilsäure, 3- und 4-Amino-benzoesäure, 2-Amino-anisol-4- und -5-sulfonsäure, 4-Amino-anisol-2- und -3- sulfonsäure, 3-Chlor -2-amino-toluol-5- sulfonsäure, 4-Chlor-2-amino-toluol-5-sulfonsäure, 3-Chlor-4-amino-benzoesäure, 4-Brom-3-amino-benzoesäure, 3-Aminophthalsäure, 4-Aminophthalsäure, 2-Amino-4-acetylamino- benzoesäure, 4-Amino-1,3-xylol-5- oder -6-sulfonsäure, 2-Amino-1,4-xylol-5-sulfonsäure, 4-Chlor- oder 4-Brom-anilin -2-sulfonsäure, 2,5-Dichloranilin-4- sulfonsäure, 3-Amino-acetanilid -4- sulfonsäure, 3-Amino--5-sulfo-benzoesäure, 6-Chlor-3-amino-4-sulfobenzoesäure, 5-Chlor-2-amino- toluol-3-und-4-sulfonsäure, 6-Chlor-2-amino-toluol -4-sulfonsäure, 6-Chlor-3-amino-toluol -4-sulfonsäure, 1-Aminobenzol-2,5-disulfonsäure, 1-Aminobenzol-2,4- und -3,5- disulfonsäure, 2- Amino-toluol -3,5- disulfonsäure, 2-Amino-toluol -4,5-disulfonsäure, 2- Amino-toluol -3,5-disulfonsäure, 2- Amino-toluol -4,6- disulfonsäure, 4-Amino-toluol -2,5- disulfonsäure, 2- Amino-naphthalin -1- sulfonsäure, 2- Aminonaphthalin-5- und -6-sulfonsäure, 2-Aminonaphthalin--7- sulfonsäure, 2-Aminonaphthalin-8- sulfonsäure, 1- Aminonaphthalin -2- sulfonsäure, 1-Aminonaphthalin -3- sulfonsäure, 1-Amino-naphthalin -4- sulfonsäure, 1-Aminonaphthalin -5- sulfonsäure, 1-Aminonaphthalin -6-sulfonsäure, 1- Aminonaphthalin- 7- sulfonsäure, 1-Aminonaphthalin-8- sulfonsäure, -2-Amino-naphthalin- 4,8-disulfonsäure, 2-Aminonaphthalin, 6,8- disulfonsäure, 2- Aminonaphthalin-1,5-disulfonsäure, 2-Aminonaphthalin -1,7- disulfonsäure, 2-Aminonaphthalin-5,7- disulfonsäure, 2-Aminonaphthalin-3,6- und -3,7-disulfonsäure, 2-Aminonaphthalin- 4,7-disulfonsäure, 1-Aminonaphthalin-2,4- und -2,5-disulfonsäure, 1-Aminonaphthalin -3,6 - und -3,7-disulfonsäure, 1- Aminonaphthalin- 3,8 - disulfonsäure, 1-Aminonaphthalin- 4,6-disulfonsäure, 1-Aminonaphthalin-4,7- disulfonsäure, 1-Aminonaphthalin- 4,8- und -5,7-disulfonsäure, 1-Aminonaphthalin- 6,8-disulfonsäure, 2-Aminonaphthalin -3,6,8- trisulfonsäure, 2-Aminonaphthalin-4,6,8-trisulfonsäure, 2-Aminonaphthalin- 1,5,7-trisulfonsäure, 1-Aminonaphthalin- 2,4,7-trisulfonsäure, 1-Aminonaphthalin- 2,4,8-trisulfonsäure, 1-Aminonaphthalin- 3,5,7-trisulfonsäure, 1- Aminonaphthalin- 3,6,8- trisulfonsäure und 1-Aminonaphthalin-4,6,8- trisulfonsäure.

Von den Aminoverbindungen der allgemeinen Formel (10): 3- Amino -4- methoxy-toluol, 3-Amino-4-äthoxy-toluol und 3-Amino-toluol.

Von den Aminonaphtholverbindungen der allgemeinen Formel (12):

1-Amino-8-hydroxynaphthalin- 3,6-disulfonsäure, 1-Amino -8- hydroxynaphthalin -4,6- disulfonsäure, 1-Äthylamino-8- hydroxynaphthalin- 3,6- disulfonsäure, 2- Amino-8-hydroxy-naphthalin- 6-sulfonsäure, 2- Methylamino -8-hydroxynaphthalin -6- sulfonsäure, 2- Methylamino -8- hydroxy- naphthalin -6- sulfonsäure, 2- Amino-5- hydroxynaphthalin- 7- sulfonsäure,

2- Methylamino -5- naphthol -7- sulfonsäure, 2-Äthylamino -5- naphthol -7- sulfonsäure, 2-(N-β-Hydroxyäthyl) -amino -5- hydroxynaphthalin -7- sulfonsäure, 1- Amino -5- hydroxynaphthalin -7-sulfonsäure, 1- Amino -5- hydroxynaphthalin -3,7- disulfonsäure, 1- Amino -8-hydroxynaphthalin -6- sulfonsäure sowie Acylamino-Derivate dieser Verbindungen, beispielsweise deren N-Acetylamino- Verbindungen, weiterhin 2- Amino -8- hydroxynaphthalin -3,6-disulfonsäure, 2- Amino-5-hydroxynaphthalin-1,7- disulfonsäure und 2- Amino -5- hydroxynaphthalin -3,7- disulfonsäure.

Von den Aminoverbindungen der allgemeinen Formel (3):

1- Amino -4- (β-sulfatoäthylsulfonyl)- benzol, 1- Amino -4- (β-thiosulfatoäthylsulfonyl)- benzol, 1- Amino -4- (β-phosphatoäthylsulfonyl)-benzol, 1-Amino-4- (β-chloräthylsulfonyl)- benzol, 1-Amino-4- (β-acetoxyäthylsulfonyl)- benzol und 1- Amino -4- vinylsulfonyl- benzol, des weiteren 1- Amino -3- (β-sulfatoäthylsulfonyl) -benzol, 1- Amino -2- methoxy-5- (β-sulfatoäthylsulfonyl)- benzol, 1-Amino-2- methoxy-4-(β-sulfatoäthylsulfonyl)- benzol, 1- Amino-2-methyl-5- (β-sulfatoäthylsulfonyl)- benzol, 1-Amino -2- methyl-4- (β-sulfatoäthylsulfonyl)-benzol, 1-Amino-4-methoxy-5- (β-sulfatoäthylsulfonyl)- benzol, 1 -Amino -4- methyl -5-(β-sulfatoäthylsulfonyl)- benzol, 1 -Amino -2-methoxy -5- methyl -4- (β-sulfatoäthylsulfonyl)-benzol, 1- Amino -2,5- dimethoxy -4- (β-sulfatoäthylsulfonyl)- benzol, 1- Amino -2,4- dimethoxy -5- (β-sulfatoäthylsulfonyl)- benzol, 1- Amino -2- methyl -5- methoxy -4- (β-sulfatoäthylsulfonyl)- benzol, 2- Chlor -1- amino -5- (β-sulfatoäthylsulfonyl)- benzol, 4- Chlor -1- amino -2-methyl -3- (β-sulfatoäthylsulfonyl)- benzol, 5-Chlor -1- amino -2- methoxy -4- (β-sulfatoäthylsulfonyl)- benzol, 1-Amino -2- brom-4- (β-sulfatoäthylsulfonyl)- benzol, 1- Amino -4- (β-sulfatoäthylsulfonyl)- benzol -2- sulfonsäure, 1-Amino -3- (β-sulfatoäthylsulfonyl)- benzol- 4,6-disulfonsäure, 2- Amino -8- oder -6- (β-sulfatoäthylsulfonyl)- naphthalin, 2- Amino -8- (β-sulfatoäthylsulfonyl)- naphthalin -6- sulfonsäure, 2-Amino -6- (β-sulfatoäthylsulfonyl)- naphthalin -1- sulfonsäure, 2- Amino -5- (β-sulfatoäthylsulfonyl)- naphthalin, 1- Amino -5- oder -6- (β-sulfatoäthylsulfonyl)- naphthalin sowie die β-Thiosulfatoäthylsulfonyl-, β-Phosphatoäthylsulfonyl-, β-Chloräthylsulfonyl, β-Acetoxyäthylsulfonyl- und Vinylsulfonyl- Derivate dieser Verbindungen.

Die Abscheidung und Isolierung der erfindungsgemäss hergestellten Verbindungen der allgemeinen Formel (1) aus der Syntheselösung kann nach allgemein bekannten Methoden erfolgen, so beispielsweise durch Ausfällen aus dem Reaktionsmedium mittels Elektrolyten, wie beispielsweise Natriumchlorid oder Kaliumchlorid, mit nachfolgender Filtration oder durch Eindampfen der Raktionslösung, beispielsweise durch Sprühtrocknung, wobei dieser Reaktionslösung eine Puffersubstanz zugefügt werden kann. Die erfindungsgemässen Verbindungen der Formel (1) können auch direkt in Form der anfallenden, gegebenenfalls konzentrierten Syntheselösungen, gegebenenfalls nach Zusatz einer Puffersubstanz, so beispielsweise als Färbepräparation, zur weiteren Verwendung gelangen.

Die erfindungsgemässen Verbindungen der allgemeinen Formel (1) zeichnen sich durch eine gute Löslichkeit in Wasser aus. Sie besitzen faserreaktive Eigenschaften und stellen wertvolle Farbstoffe dar. Sie eignen sich zum Färben oder Bedrucken von Materialien, insbesondere Fasermaterialien, aus natürlicher oder regenerierter Cellulose, wie Baumwolle, Leinen, Hanf, Jute, Viskosekunstseide, oder aus natürlichen, regenerierten oder synthetischen Polyamiden, wie Seide, Wolle, Polyamid-6, Polyamid-66, Polyamid-11, des weiteren von Fasermaterialien aus synthetischen Polyurethanen und von Leder. Insbesondere der Formel (1) als faserreaktive Farbstoffe zum Färben oder Bedrucken von Cellulose oder celulosehaltigen Fasermaterialien.

Gegenstand der vorliegenden Erfindung ist somit auch die Verwendung der erfindungsgemässen Verbindungen der Formel (1) zum Färben oder Bedrucken der obengenannten Fasermaterialien oder von Leder bzw. ein Verfahren zum Färben oder Bedrucken dieser Fasermaterialien oder von Leder, beispielsweise analog bekannten, in der Technik üblichen Färbe- oder Druck- und Fixierverfahren, bei welchem man eine Kupferkomplex-Disazoverbindung der allgemeinen Formel (1) in gelöster Form auf das genannte Substrat aufbringt und auf diesem, beispielsweise analog bekannten und in der Technik üblichen Verfahren, insbesondere solchen, die für faserreaktive Farbstoffe eingesetzt werden können, fixiert.

So erhält man mit ihnen auf Cellulosefasern beispielsweise nach den Ausziehverfahren aus langer Flotte unter Verwendung von säurebindenden Mitteln und gegebenenfalls neutralen Salzen, wie Natriumchlorid oder Natriumsulfat, Färbungen mit hoher Farbstärke und Farbausbeute. Ebenso werden nach dem Klotzverfahren und nach den üblichen Druckverfahren auf Cellulosefasermaterialien farbstarke Färbungen und Drucke erhalten.

Die Fixierung erfolgt in der Regel mit Hilfe alkalisch wirkender Mittel, wie beispielsweise unter Anwendung von Alkalihydroxiden, Alkalicarbonaten, Alkaliphosphaten oder Alkalisilikaten, wobei das Alkalimetall vorzugsweise Natrium oder Kalium ist.

Die Kolorierung der carbonamidgruppenhaltigen Materialien erfolgt in der Regel im neutralen bis schwach sauren pH-Bereich nach den in der Technik üblichen Färbe- und Druckverfahren für natürliche und synthetische Polyamidfasermaterialien und Leder. Solche Färbe- und Fixierweisen sind in der Literatur zahlreich beschrieben.

Die mit den erfindungsgemässen Verbindungen der Formel (1) auf den genannten Materialien erhaltenen Färbungen und Drucke zeichnen sich in der Regel durch eine hohe Farbstärke aus; sie zeigen sehr gute Lichtechtheiten und gute bis

sehr gute Nassechtheiten, wie beispielsweise gute bis sehr gute Waschechtheiten, eine gute Chlorbadewasserechtheit, Walkechtheiten, Überfärbeechtheiten, Wasser- und Seewasser- sowie Hypochloritbleichechtheiten.

Die nachstehenden Beispiele dienen zur Erläuterung der Erfindung. Die darin genannten Teile sind Gewichtsteile und die Prozentangaben stellen Gewichtsprozente dar, sofern nichts anderes vermerkt. Gewichtsteile verhalten sich zu Volumenteilen wie Kilogramm zu Liter.

Die in den Beispielen formelmässig beschriebenen Verbindungen sind in Form der freien Säuren angegeben; im allgemeinen werden sie in Form ihrer Natrium- oder Kaliumsalze hergestellt und isoliert und in Form ihrer Salze zum Färben verwendet. Ebenso können die in den nachfolgenden Beispielen, insbesondere Tabellenbeispielen, in Form der freien Säure genannten Ausgangsverbindungen als solche oder in Form ihrer Salze, vorzugsweise Alkalimetallsalze, wie Natrium- oder Kaliumsalze, in die Synthese eingesetzt werden.

Beispiel 1

a) 44,7 Teile 2-Sulfoanilin werden in üblicher Weise in wässrigem, salzsaurem Medium mit Natriumnitrit diazotiert; zu der Diazoniumsalzdispersion wird eine salzsaure wässrige Lösung von 34,3 Teilen 3-Amino-4-methoxy-toluol gegeben, und dieser Kupplungsansatz wird mit Natriumacetat und Natriumcarbonat auf einen pH-Wert von 3 bis 4 gestellt und bei diesem pH während der Kupplung gehalten, anschliessend auf 60 °C erwärmt, mit Natronlauge auf einen pH-Wert von 7,5 bis 8 gestellt, mit Kieselgur geklärt und filtriert.

b) Das unter a) erhaltene Filtrat mit der gebildeten Aminoazoverbindung wird mit etwa 850 Teilen Eis und einer wässrigen Lösung von 18 Teilen Natriumnitrit versetzt; die Diazotierung erfolgt durch Zugabe von 300 Teilen einer 31%igen wässrigen Salzsäure. Es wird eine Stunde bei 5 bis 10 °C weitergerührt und überschüssiges Nitrit, wie üblich, mit Amidosulfonsäure zersetzt. Die erhaltene Suspension der Diazoniumverbindung wird in eine neutrale Lösung von 90,4 Teilen 1-Acetylamino-8-naphthol-3,6-disulfonsäure in 250 Teilen Wasser eingeführt, wobei der pH-Wert zwischen 5,5 und 6,5 mittels Natriumcarbonat gehalten wird.

c) Nach beendeter Kupplung wird die unter b) erhaltene Lösung der Disazoverbindung mit 69 Teilen Kupfersulfatpentahydrat und weiterhin mit 100 Teilen einer 25%igen wässrigen Ammoniaklösung und 38 Teilen Morpholin versetzt; der Ansatz wird unter Rückfluss vier Stunden gekocht, anschliessend auf 60 °C abgekühlt und mit Natronlauge auf einen pH-Wert von 10 gestellt. Die gebildete Kupferkomplex-Disazoverbindung wird mit Natriumchlorid ausgesalzen und abfiltriert; der Filterrückstand wird mit einer natriumcarbonathaltigen Natriumchloridlösung gewaschen, sodann in eine Lösung von 1200 Teilen Wasser und 160 Teilen einer 33%igen wässrigen Natronlauge gegeben und darin 40 Minuten unter Rückfluss gekocht. Dieser Ansatz wird anschliessend bei einer Temperatur von 50 bis 60 °C mit 20 Teilen Kieselgur geklärt und filtriert und das Filtrat mit Salzsäure auf einen pH-Wert zwischen 6 und 7 gestellt. Es enthält das Natriumsalz der Verbindung der Formel

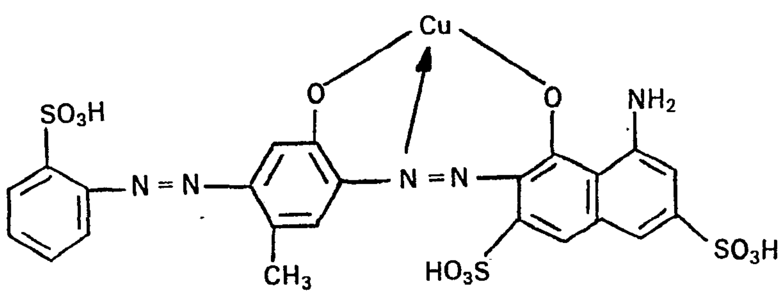

d) Die unter c) erhaltene Lösung der Kupferkomplex-Disazoverbindung wird auf 0 bis 5 °C abgekühlt, und 1,5 Teile eines handelsüblichen Netzmittels und 48 Teile Cyanurchlorid werden hinzugegeben. Man führt diese Kondensationsreaktion unter Rühren bei einer Temperatur zwischen 0 und 10 °C und einem pH-Wert zwischen 5 und 6 zu Ende (die Umsetzung kann dünnschichtchromatographisch verfolgt werden).

e) Zu dieser Lösung des primären Kondensationsproduktes gibt man zur Durchfürhung der zweiten Kondensationsreaktion eine neutrale Lösung von 72 Teilen 4-β-Sulfatoäthylsulfonyl-anilin in 250 Teilen Wasser hinzu, rührt 15 Stunden bei 40 bis 50 °C unter Konstanthaltung des pH-Wertes zwischen 5 und 6 und klärt anschliessend den Ansatz mittels Kieselgur und Filtration.

Aus dem unter e) erhaltenen Filtrat wird die erfindungsgemässe Kupferkomplex-Disazoverbindung mit Natriumchlorid ausgesalzen, abfiltriert, mit verdünnter wässriger Natriumchloridlösung gewaschen, getrocknet und gemahlen. Man erhält ein dunkles, Elektrolytsalze enthaltendes Pulver der Natriumverbindung der Verbindung der Formel

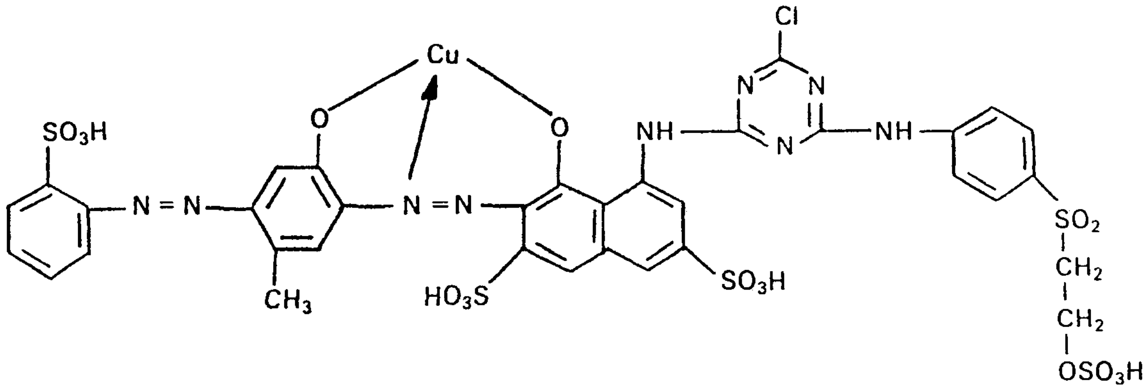

Diese erfindungsgemässe Kupferkomplex-Disazoverbindung zeigt sehr gute faserreaktive Farbstoffeigenschaften. Sie färbt die in der Beschreibung genannten Materialien, wie insbesondere Cellulosefasermaterialien, wie Baumwolle, nach den in der Technik für faserreaktive Farbstoffe üblichen Applikations- und Fixierverfahren in farbstarken marineblauen Tönen mit ausgezeichneten Lichtechtheiten und guten Nassechtheiten, wie beispielsweise einer guten Chlorbadewasserechtheit und Hypochloritbleichechtheit.

(Die erfindungsgemässe Kupferkomplex-Disazoverbindung kann aus ihrer Syntheselösung auch durch Eindampfen oder Sprühtrocknen isoliert werden, ebenfalls durch Aussalzen mit Kaliumchlorid; im letzteren Falle erhält man das entsprechende neutrale Kaliumsalz der unter e) formelmässig angegebenen Verbindung. Unabhängig von allen diesen Isolierungsmethoden sind die guten Eigenschaften der erfindungsgemässen Verbindung dieselben.)

Beispiel 2

Die erfindungsgemässe Kupferkomplex-Disazoverbindung des Beispiels 1 lässt sich auch in der Weise erfindungsgemäss herstellen, wenn man in Abänderung der Verfahrensweise des Beispieles 1 in der Verfahrensstufe des Beispieles 1a) anstelle des dort als Kupplungskomponente verwendeten 3- Amino -4- methoxytoluols das 3-Amino-4-äthoxy-toluol als Kupplungskomponente in äquivalenter Menge einsetzt.

Die auf diesem Wege hergestellte, mit der erfindungsgemässen Kupferkomplex-Disazoverbindung des Beispieles 1 identische Kupferkomplex-Disazoverbindung des Beispieles 2 zeigt wie die des Beispieles 1 die gleichen (guten) faserreaktiven Farbstoffeigenschaften.

Beispiel 3

a) Eine Lösung mit einem pH-Wert von 6 von 74 Teilen 4-(β-Sulfatoäthylsulfonyl)-anilin in 250 Teilen Wasser wird in eine Suspension von 50 Teilen Cyanurchlorid und 1,5 Teilen eines handelsüblichen Netzmittels in 400 Teilen Eis und Wasser eingerührt. Die Umsetzung wird unter Rühren bei einer Temperatur zwischen 0 und 5 °C und einem pH-Wert zwischen 3,5 und 4,5 zu Ende geführt (die Acylierungsreaktion mit einem Umsetzungsgrad von 99% und höher ist nach etwa 2 Stunden beendet).

b) Das hier unter a) erhaltene primäre Reaktionsprodukt der Formel ( in Form der freien Säure geschrieben)

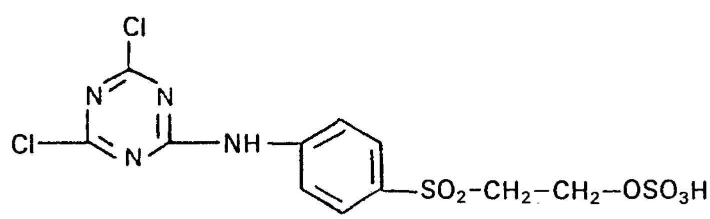

wird mit der Lösung der gemäss dem Beispiel 1c) hergestellten Kupferkomplex-Disazoverbindung vereinigt; diese zweite Kondensationsreaktion wird unter 15 stündigem Rühren bei einer Temperatur zwischen 40 und 50 °C und einem pH-Wert zwischen 5 und 6 zu Ende geführt.

Es wird – nach üblicher Aufarbeitung des Reaktionsansatzes – eine erfindungsgemässe Kupferkomplex-Disazoverbindung isoliert, die mit der nach der Verfahrensweise des Beispieles 1 oder des Beispiels 2 hergestellten erfindungsgemässen Kupferkomplex-Disazoverbindung identisch ist und ebenfalls dieselben guten Eigenschaften als faserreaktiver Farbstoff besitzt.

Beispiel 4

Zur Herstellung einer erfindungsgemässen Kupferkomplex-Disazoverbindung verfährt man gemäss der Verfahrensweise des Beispieles 1, verwendet jedoch in der Verfahrensstufe e) dieses Beispieles 1 anstelle des 4-(β-Sulfatoäthylsulfonyl)- anilins das 4-(β-Thiosulfatoäthylsulfonyl)-anilin in äquivalenter Menge.

Man erhält nach Aufarbeitung das Alkalimetallsalz, wie Natrium- oder Kaliumsalz, der Verbindung der Formel

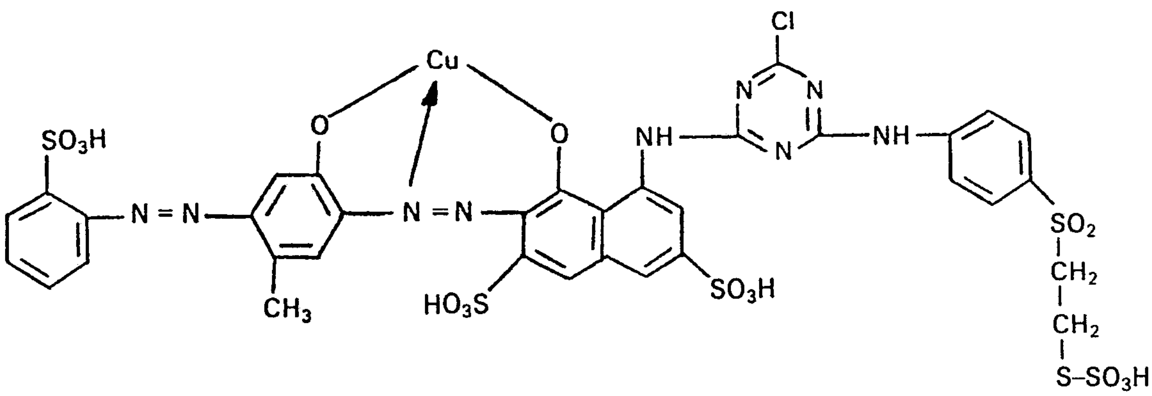

die sehr gute Farbstoffeigenschaften besitzt und die in der Beschreibung genannten Materialien, wie insbesondere Cellulosefasermaterialien, vorzugsweise Baumwolle, nach den in der Technik für faserreaktive Farbstoffe üblichen Applikations- und Fixiermethoden in farbstarken marineblauen Tönen mit sehr guten Lichtechtheiten und guten Nassechtheiten, wie solchen, die für die erfindungsgemässe Verbindung des Beispiels 1 erwähnt sind, färbt.

Beispiel 5

Zur Herstellung einer erfindungsgemässen Kupferkomplex-Disazoverbindung verfährt man gemäss der Verfahrensweise des Beispiels 1, setzt jedoch in der Verfahrensstufe e) dieses Beispieles 1 anstelle des 4-(β-Sulfatoäthylsulfonyl)-anilins das 4- (β-Phosphatoäthylsulfonyl)- anilin in äquivalenter Menge ein.

Man erhält – nach Aufarbeitung des Reaktionsansatzes – das Alkalimetallsalz, wie Natrium- oder Kaliumsalz, der Verbindung der Formel

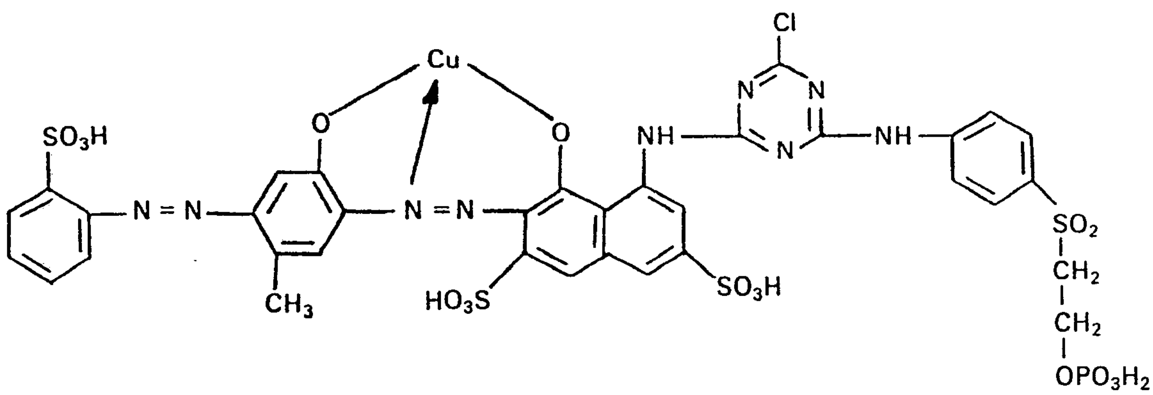

das gleich gute faserreaktive Farbstoffeigenschaften wie die erfindungsgemässe Verbindung des Beispieles 1 besitzt und nach den in der Technik üblichen Applikations- und Fixiermethoden für faserreaktive Farbstoffe beispielsweise Baumwolle in kräftigen marineblauen Tönen mit guten Lichtechtheiten und guten Nassechtheiten, wie sie beispielsweise für die erfindungsgemässe Verbindung des Beispieles 1 beschrieben sind, liefert.

Beispiel 6

Man verfährt zur Herstellung einer erfindungsgemässen Kupferkomplex-Disazoverbindung gemäss der Verfahrensweise des Beispieles 1, setzt jedoch in der Verfahrensstufe e) dieses Beispieles 1 anstelle der Lösung des 4-(β-Sulfatoäthylsulfonyl)- anilins 47 Tl. 4-Vinylsulfonyl-anilin in Form eines Pulvers oder einer wässrigen Suspension ein. Man erhält – nach Aufarbeitung des Syntheseansatzes – die erfindungsgemässe Kupferkomplex-Disazoverbindung

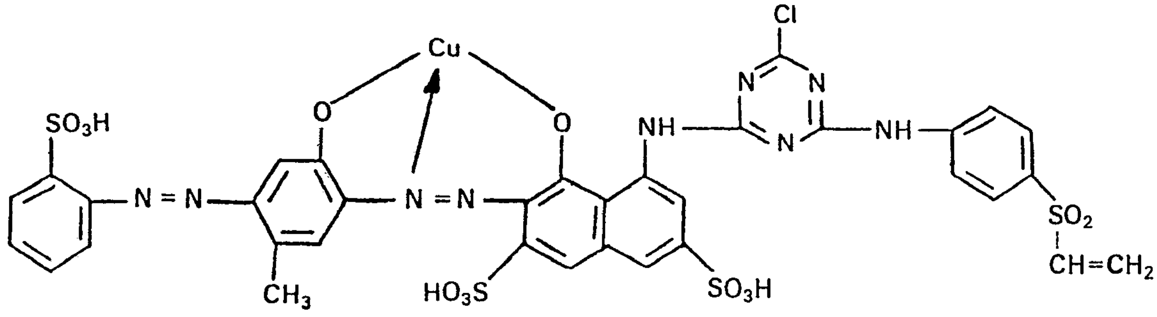

in Form ihres Alkalimetallsalzes, wie Natrium- oder Kaliumsalzes. Diese erfindungsgemässe Verbindung zeigt ebenfalls sehr gute faserreaktive Farbstoffeigenschaften. Nach üblichen Anwendungsmethoden, beispielsweise für faserreaktive Farbstoffe, werden mit ihr farbstarke marineblaue Färbungen und Drucke erhalten, die sich durch sehr gute Lichtechtheiten und gute Nassechtheiten, wie beispielsweise solchen, die für die erfindungsgemässe Verbindung des Beispieles 1 erwähnt sind, auszeichnen.

Beispiel 7

Zur Herstellung einer erfindungsgemässen Disazoverbindung verfährt man gemäss der Verfahrensweise des Beispieles 1, setzt jedoch in der Stufe e) dieses Beispieles 1 anstelle der neutralen Lösung des 4-β-Sulfatoäthylsulfon-anilins 56 Teile 4-(β-Chloräthylsulfonyl)-anilin in Form eines Pulvers oder in Form einer Lösung in einem organischen Lösemittel, wie beispielsweise Aceton, ein.

Man erhält – nach Aufarbeitung des Reaktionsansatzes – das Alkalimetallsalz, wie Natrium- oder Kaliumsalz, der Verbindung der Formel

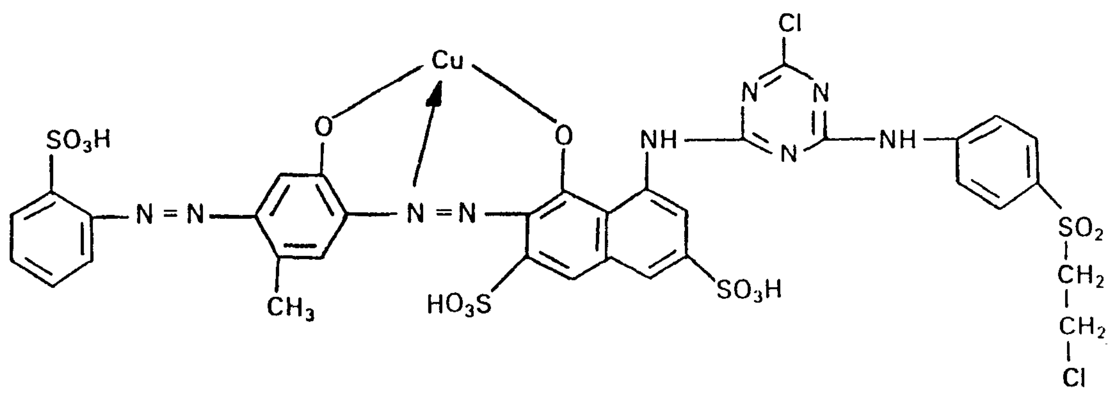

Diese erfindungsgemässe Kupferkomplex-Disazoverbindung zeigt ebenfalls sehr gute faserreaktive Farbstoffeigenschaften und liefert nach den in der Anwendungstechnik üblichen Applikations- und Fixiermethoden auf den in der Beschreibung genannten Materialien, wie insbesondere Cellulosefasermaterialien, farbstarke marineblaue Färbungen und Drucke mit sehr guten Lichtechtheiten und guten Nassechtheiten, wie denjenigen, die für die erfindungsgemässe Kupferkomplex-Disazoverbindung des Beispieles 2 genannt sind.

Beispiel 8

Zur Herstellung einer erfindungsgemässen Kupferkomplex-Disazoverbindung verfährt man gemäss der Verfahrensweise des Beispieles 1, verwendet jedoch in der Verfahrensstufe e) dieses Beispieles 1 anstelle der neutralen Lösung des 4-(β-Sulfatoäthylsulfonyl)-anilins 62 Teile 3-(β-Acetoxyäthylsulfonyl)-anilin.

Man erhält – nach Aufarbeitung des Syntheseansatzes in üblicher Weise, so gemäss den Angaben des Beispieles 1 – das Alkalimetallsalz, wie Natrium- oder Kaliumsalz, der Verbindung der Formel

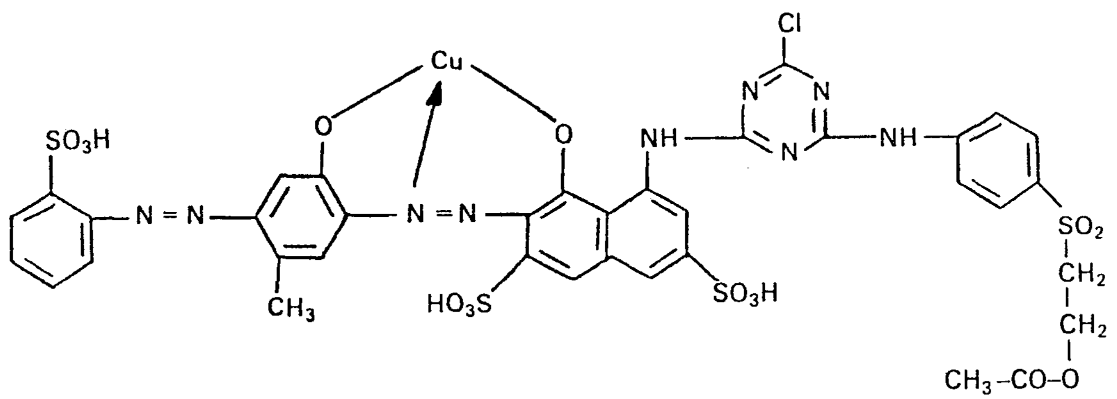

Diese erfindungsgemässe Kupferkomplex-Disazoverbindung zeigt ebenfalls sehr gute faserreaktive Eigenschaften. Sie liefert auf den in der Beschreibung genannten Materialien, insbesondere auf Cellulosefasermaterialien nach den üblichen Applikations- und Fixiermethoden für faserreaktive Farbstoffe, farbstarke marineblaue Drucke mit sehr guten Lichtechtheiten und Nassechtheiten, von denen insbesondere die gute Hypochloritbleichechtheit und Chlorbadewasserechtheit hervorzuheben sind.

Beispiel 9

a) 61 Teile 2-Amino-naphthalin- 6,8-disulfonsäure werden in üblicher Weise in wässriger, salzsaurer Lösung mit Natriumnitrit diazotiert und sodann analog bekannter Verfahrensweise bei einem pH-Wert von 2 bis 3 mit 21,5 Teilen 3-Amino-toluol gekuppelt. Die gebildete und ausgefallene Monoazoverbindung wird abfiltriert und in 750 Teilen Wasser bei einer Temperatur von 50 bis 60 °C bei einem pH-Wert zwischen 7 und 7,5 gelöst. Die Lösung wird mit Kieselgur geklärt und das Filtrat anschliessend mit einer wässrigen Lösung von 15 Teilen Natriumnitrit und mit 500 Teilen Eis versetzt und sodann mit 70 Teilen einer 31%igen wässrigen Salzsäure diazotiert. Nach 30minütigem Nachrühren zerstört man überschüssiges Nitrit, wie üblich, durch etwas Amidosulfonsäure.

b) Die unter a) erhaltene Diazoniumsalzsuspension der Monoazoverbindung gibt man unter Rühren in eine neutrale Lösung von 72 Teilen 1-Acetylamino-8-naphthol- 3,6-disulfonsäure in 250 Teilen Wasser, wobei der pH-Wert zwischen 5,0 und 6,5 mittels Natriumcarbonat gehalten wird. Nach beendeter Kupplung wird die gebildete Disazoverbindung der Formel

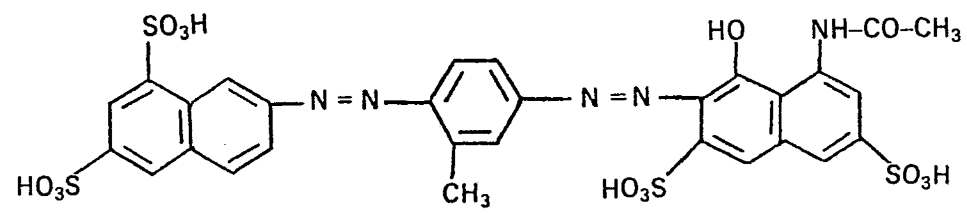

in Form ihres Natriumsalzes mittels Natriumchlorid ausgesalzen und abfiltriert.

c) Der unter b) erhaltene Filterkuchen der metallfreien Disazoverbindung wird in 1800 Teilen Wasser gelöst; 90 Teile kristallisiertes Kupfersulfat und 130 Teile Natriumacetat werden hinzugegeben. Sodann gibt man langsam unter Rühren innerhalb von 4 Stunden bei einem pH-Wert von 5,0 bis 5,2 100 Teile einer 30%igen wässrigen Wasserstoffsuperoxid-Lösung hinzu. Es wird noch einige Zeit nachgerührt, bis die Kupferkomplexbildung vollständig ist (was chromatographisch nachgeprüft werden kann). Die gebildete Kupferkomplex-Disazoverbindung wird sodann mit Natriumchlorid ausgesalzen, abfiltriert, mit verdünnter wässriger Natriumchloridlösung gewaschen, sodann in 1000 Teile Wasser gegeben, mit 50 Teilen Natriumhydroxid versetzt und 45 Minuten unter Rückfluss gekocht. Nach Abkühlen auf 25 °C gibt man 22 Teile Oxalsäure-dihydrat hinzu und stellt nach 10 Minuten mit Salzsäure einen pH-Wert zwischen 6 und 7 ein. Man klärt die Lösung mittels Kieselgur und Filtration. Das Filtrat enthält das Natriumsalz der Verbindung der Formel

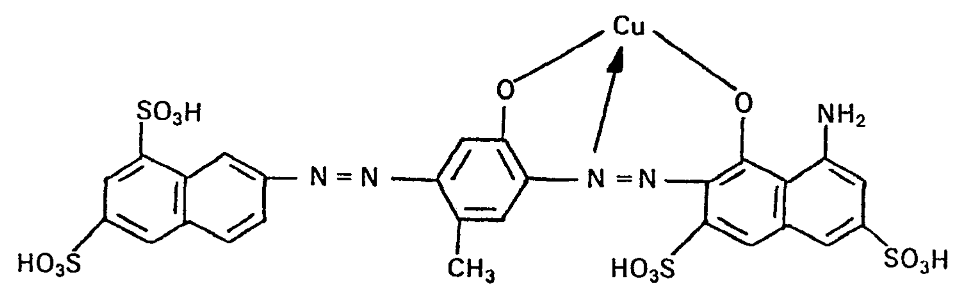

d) Die unter c) erhaltene Lösung der Kupferkomplex-Disazoverbindung wird bei 0 bis 5 °C mit 1,2 Teilen eines handelsüblichen Netzmittels und sodann unter Rühren mit 38,5 Teilen Cyanurchlorid versetzt; man rührt noch bei einer Temperatur von 0 bis 10 °C und einem pH-Wert zwischen 5 und 6 weiter, bis die Kondensationsreaktion zum primären Kondensationsprodukt zu Ende geführt ist (was chromatographisch verfolgt werden kann).

e) Zu dieser unter d) erhaltenen Lösung des primären Kondensationsproduktes gibt man eine neutrale Lösung von 58 Teilen 4-(β-Sulfatoäthylsulfonyl)- anilin in 200 Teilen Wasser und rührt 50 Stunden bei 40 bis 50 °C unter Konstanthaltung eines pH-Wertes zwischen 5 und 6 mittels Natriumbicarbonat weiter. Der Ansatz wird sodann bei 50 bis 60 °C mittels Kieselgur geklärt und die gebildete erfindungsgemässe Kupferkomplex-Disazoverbindung mittels Kaliumchlorid oder Natriumchlorid ausgesalzen, abfiltriert, getrocknet und gemahlen.

Diese als Alkalimetallsalz erhaltene Verbindung der Formel

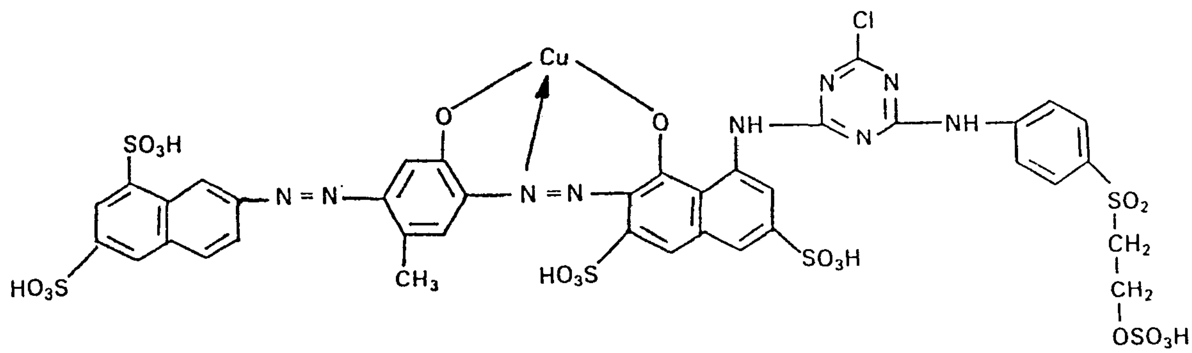

zeigt sehr gute Farbstoffeigenschaften. Bei Anwendung nach den in der Technik für faserreaktive Farbstoffe üblichen Applikations- und Fixiermethoden erhält man mit ihr auf den in der Beschreibung genannten Materialien, wie insbesondere Cellulosefasermaterialien, beispielsweise Baumwolle, farbstarke marineblaue Färbungen und Drucke von sehr guter Lichtechtheit und guten Nassechtheiten.

Beispiel 10

Zur Herstellung der erfindungsgemässen Kupferkomplex-Disazoverbindung des Beispieles 1 verfährt man analog der Verfahrensweise des Beispieles 9, verwendet jedoch in der Stufe a) dieses Beispieles 9 anstelle der 2-Aminonaphthalin-6,8-disulfonsäure die äquivalente Menge an 2-Sulfo-anilin.

Man erhält – nach üblicher Aufarbeitung des Reaktionsansatzes und Isolierung der gebildeten erfindungsgemässen Verbindung – ein Produkt, das in seinen färberischen Qualitäten und Echtheiten gleiche Eigenschaften wie die nach Beispiel 1 hergestellte Kupferkomplex-Disazoverbindung besitzt.

Beispiel 11

In eine Suspension von 38,8 Tln. Cyanurchlorid in 320 Teilen Eis/Wasser mit 2 Teilen eines handelsüblichen Netzmittels trägt man 63,8 Teile 1-Amino-8-naphthol- 3,6-disulfonsäure ein. Man rührt den Reaktionsansatz bei 10 bis 15 °C und einem pH-Wert zwischen 2 und 2,5 noch etwa zwei Stunden weiter und gibt anschliessend eine neutrale Lösung von 59 Teilen (4-(β-Sulfatoäthylsulfonyl)-anilin in 200 Teilen Wasser hinzu. Man erwärmt langsam auf 35 bis 45 °C und rührt sodann bei dieser Temperatur und einem pH-Wert zwischen 5 und 6 15 Stunden nach. Dieses sekundäre Kondensationsprodukt der Formel (in Form der freien Säure geschrieben)

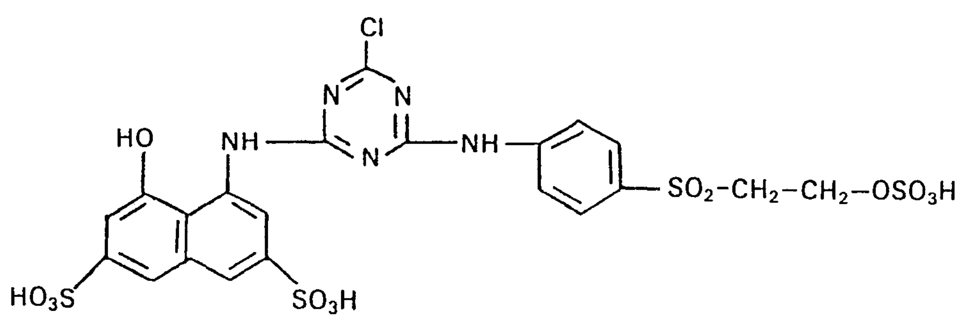

dient als Kupplungskomponente zur weiteren Herstellung der erfindungsgemässen Kupferkomplex-Disazoverbindung.

Zu dieser auf eine Temperatur von 0 bis 10 °C abgekühlten Lösung gibt man die wässrige Suspension des Diazoniumsalzes der Monoazoverbindung hinzu, die gemäss Beispiel 9a hergestellt wurde; hierbei wird mittels Natriumcarbonat ein pH-Wert zwischen 6 und 7,5 gehalten. Nach beendeter Kupplung zur metallfreien Disazoverbindung gibt man 90 Teile Kupfersulfat-pentahydrat und 130 Teile Natriumacetat hinzu, rührt dieses Reaktionsgemisch vier Stunden bei einer Temperatur zwischen 15 und 30 °C und einem pH-Wert zwischen 5,0 und 5,2 unter Zugabe von 110 Teilen einer 30%igen wässrigen Wasserstoffsuperoxid-Lösung und sodann noch einige Zeit weiter, bis die metallfreie Disazoverbindung verschwunden ist (was chromatographisch verfolgt werden kann).

Die so gebildete erfindungsgemässe Kupferkomplex-Disazoverbindung wird durch Aussalzen mit Natriumchlorid oder Kaliumchlorid isoliert. Sie ist mit der nach Beispiel 9 hergestellten erfindungsgemässen Kupferkomplex-Disazoverbindung identisch und zeigt dementsprechend die gleich guten färberischen Eigenschaften und Echtheiten wie die des Beispieles 9.

Beispiele 12 bis 266

In den nachfolgenden Tabellenbeispielen sind weitere erfindungsgemässe Kupferkomplex-Disazoverbindung entsprechend der allgemeinen Formel (1) mit Hilfe der Komponenten der nachstehend angegebenen allgemeinen Formel (1c)

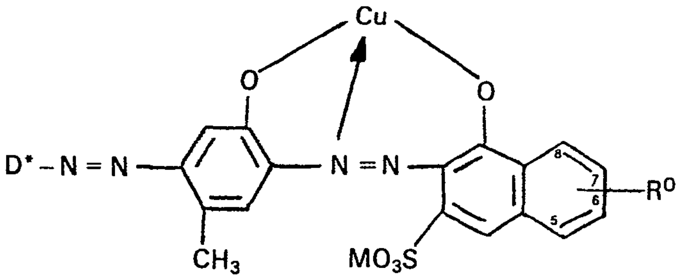

(1c)

beschrieben. Sie lassen sich in erfindungsgemässer Weise, beispielsweise analog einem der obigen Ausführungsbeispiele, aus den aus dieser Formel und den zugehörigen Tabellenangaben der Formelreste ersichtlichen Komponenten herstellen. Sie stellen sehr gute Farbstoffe mit faserreaktiven Eigenschaften dar und liefern auf den in der Beschreibung genannten Materialien, wie insbesondere Cellulosefasermaterialien, beispielsweise Baumwolle, nach den für faserreaktive Farbstoffe üblichen Applikations- und Fixiermethoden farbstarke Färbungen und Drucke mit guten Echtheiten in jeweils marineblauen bis, je nach Farbtiefe, blauschwarze Nuancen.

In diesen Tabellenbeispielen haben die Formelglieder $Z_1$ bis $Z_6$ die folgenden Bedeutungen:

$Z_1$ : $-SO_2-CH_2-CH_2-OSO_3M$
$Z_2$ : $-SO_2-CH_2-CH_2-S-SO_3M$
$Z_3$ : $-SO_2-CH_2-CH_2-Cl$
$Z_4$ : $-SO_2-CH=CH_2$
$Z_5$ : $-SO_2-CH_2-CH_2-O-CO-CH_3$
$Z_6$ : $-SO_2-CH_2-CH_2-OPO_3M_2$,

in welchen M die in der Beschreibung genannte Bedeutung besitzt.

Das in diesen Tabellenbeispielen befindliche Formelglied –CT– stellt den Rest der Formel

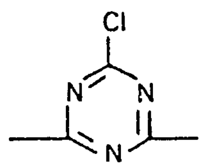

dar.

| Bsp. | Rest D* der Diazokomponente entspr. Formel (9) | Formelglied R° | R° ist in ...-Stellung | Sulfogruppe in ...-Stellg. des Naphtholrestes |
|---|---|---|---|---|
| 12 | 2-Sulfophenyl | –NH–CT–NH– 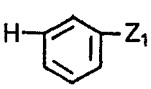 | 8- | 6- |
| 13 | do. | –NH–CT–NH– 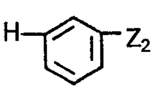 | 8- | 6- |
| 14 | do. | –NH–CT–NH– 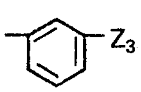 | 8- | 6- |
| 15 | do. | –NH–CT–NH– 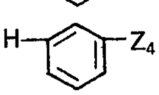 | 8 | 6- |
| 16 | do. | –NH–CT–NH– 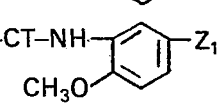 | 8- | 6- |
| 17 | do. | –NH–CT–NH– 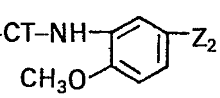 | 8- | 6- |
| 18 | do. | –NH–CT–NH– 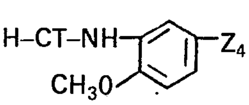 | 8- | 6- |

| Bsp. | D* | Formelglied R° | R° in . . . -St. | Sulfo in . . . -St. |
|---|---|---|---|---|
| 19 | 2-Sulfophenyl | 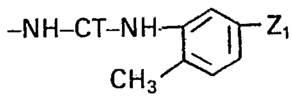 | 8- | 6- |
| 20 | do. | 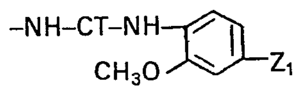 | 8- | 6- |
| 21 | do. | 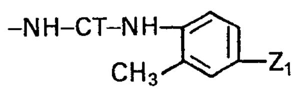 | 8- | 6- |
| 22 | do. | 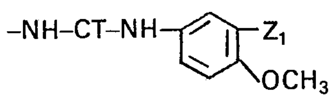 | 8- | 6- |
| 23 | do. | 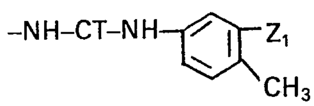 | 8- | 6- |
| 24 | do. | 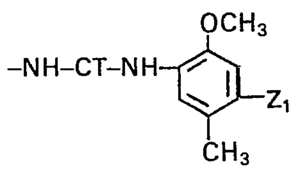 | 8- | 6- |
| 25 | do. | 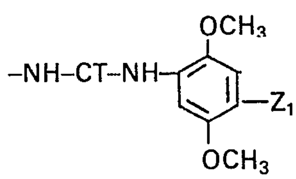 | 8- | 6- |
| 26 | do. | 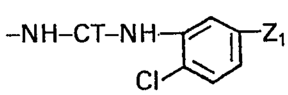 | 8- | 6- |
| 27 | do. | 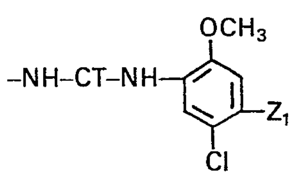 | 8- | 6- |
| 28 | do. | 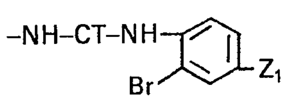 | 8- | 6- |
| 29 | do. | 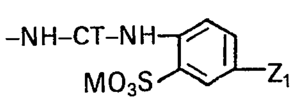 | 8- | 6- |
| 30 | do. | 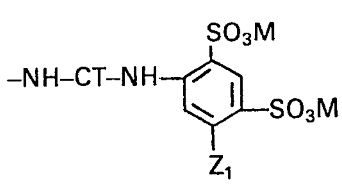 | 8- | 6- |

| Bsp. | D* | Formelglied R° | R° in . . . -St. | Sulfo in . . . -St. |
|---|---|---|---|---|
| 31 | 2-Sulfophenyl | –NH–CT–NH– 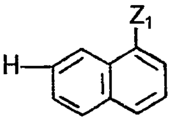 | 8- | 6- |
| 32 | do. | –NH–CT–NH– 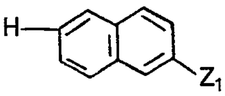 | 8- | 6- |
| 33 | do. | –NH–CT–NH– 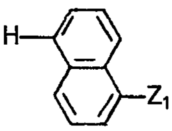 | 8- | 6- |
| 34 | do. | –NH–CT–NH– 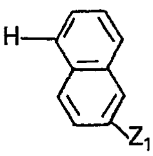 | 8- | 6- |
| 35 | do. | –NH–CT–NH– 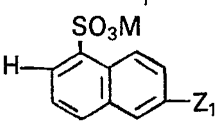 | 8- | 6- |
| 36 | do. | –NH–CT–NH– 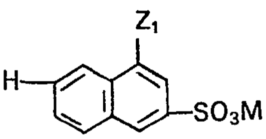 | 8- | 6- |
| 37 | do. | –N –CT–NH– 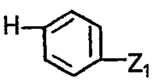<br>$CH_3$ | 8- | 6- |
| 38 | do. | –N –CT–NH– 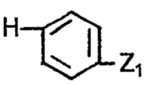<br>$C_2H_5$ | 8- | 6- |
| 39 | 3-Sulfophenyl | –NH–CT–NH– 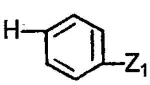 | 8- | 6- |
| 40 | do. | –NH–CT–NH– 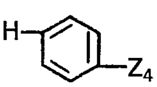 | 8- | 6- |
| 41 | 4-Sulfophenyl | do. | 8- | 6- |
| 42 | do. | –NH–CT–NH– 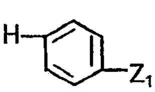 | 8- | 6- |
| 43 | 2-Carboxy-5-sulfophenyl | do. | 8- | 6- |
| 44 | do. | –NH–CT–NH– 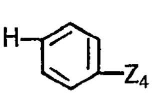 | 8- | 6- |
| 45 | 2-Carboxy-4-sulfophenyl | do. | 8- | 6- |

| Bsp. | D* | Formelglied R° | R° in . . . -St. | Sulfo in . . . -St. |
|---|---|---|---|---|
| 46 | 2-Carboxy-4-sulfophenyl | –NH–CT–NH– 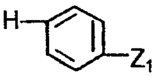 | 8- | 6- |
| 47 | 2-Sulfo-4-methyl-phenyl | –NH–CT–NH– 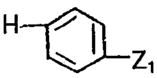 | 8- | 6- |
| 48 | do. | –NH–CT–NH– 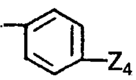 | 8- | 6- |
| 49 | do. | –NH–CT–NH– 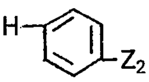 | 8- | 6- |
| 50 | 2-Carboxyphenyl | do. | 8- | 6- |
| 51 | do. | –NH–CT–NH– 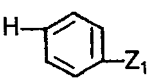 | 8- | 6- |
| 52 | do. | –NH–CT–NH– 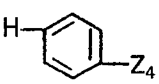 | 8- | 6- |
| 53 | 2-Sulfo-4-methoxy-phenyl | do. | 8- | 6- |
| 54 | do. | –NH–CT–NH– 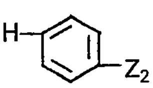 | 8- | 6- |
| 55 | do. | –NH–CT–NH– 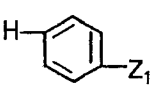 | 8- | 6- |
| 56 | 2-Sulfo-4-chlor-phenyl | do. | 8- | 6- |
| 57 | 2-Sulfo-4-brom-phenyl | do. | 8- | 6- |
| 58 | 2-Sulfo-5-acetylamino-phenyl | do. | 8- | 6- |
| 59 | 2,5-Disulfophenyl | do. | 8- | 6- |
| 60 | do. | –NH–CT–NH– 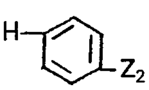 | 8- | 6- |
| 61 | do. | –NH–CT–NH– 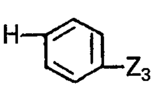 | 8- | 6- |
| 62 | do. | –NH–CT–NH– 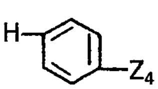 | 8- | 6- |

| Bsp. | D* | Formelglied R° | R° in . . . -St. | Sulfo in . . . -St. |
|---|---|---|---|---|
| 63 | 2,5-Disulfophenyl | –NH–CT–NH– 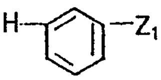 | 8- | 6- |
| 64 | do. | –NH–CT–NH– 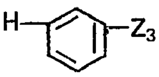 | 8- | 6- |
| 65 | do. | –NH–CT–NH– 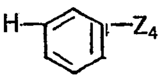 | 8- | 6- |
| 66 | 2,4-Disulfophenyl | –NH–CT–NH– 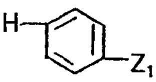 | 8- | 6- |
| 67 | do. | –NH–CT–NH– 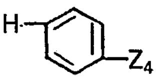 | 8- | 6- |
| 68 | 3,5-Disulfophenyl | do. | 8- | 6- |
| 69 | do. | –NH–CT–NH– 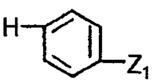 | 8- | 6- |
| 70 | 2,5-Disulfo-4-methyl-phenyl | do. | 8- | 6- |
| 71 | do. | –NH–CT–NH– 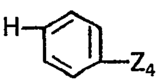 | 8- | 6- |
| 72 | 4-Sulfo-1-naphthyl | do. | 8- | 6- |
| 73 | do. | –NH–CT–NH– 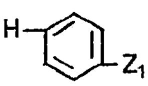 | 8- | 6- |
| 74 | 6-Sulfo-2-naphthyl | do. | 8- | 6- |
| 75 | do. | –NH–CT–NH– 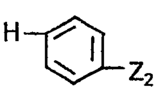 | 8- | 6- |
| 76 | do. | –NH–CT–NH 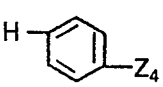 | 8- | 6- |
| 77 | 3,6-Disulfo-1-naphthyl | –NH–CT–NH 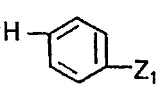 | 8- | 6- |
| 78 | do. | –NH–CT–NH 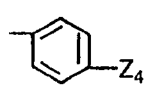 | 8- | 6- |
| 79 | 4,8-Disulfo-2-naphthyl | do. | 8- | 6- |

| Bsp. | D* | Formelglied R° | R° in . . .–St. | Sulfo in . . .–St. |
|---|---|---|---|---|
| 80 | 4,8-Disulfo-2-naphthyl | –NH–CT–NH 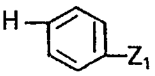 | 8- | 6- |
| 81 | 4,6,8-Trisulfo-2-naphthyl | do. | 8- | 6- |
| 82 | do. | –NH–CT–NH 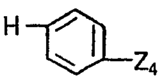 | 8- | 6- |
| 83 | 2-Sulfophenyl | –NH–CT–NH 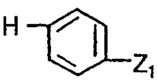 | 8- | 5- |
| 84 | do. | –NH–CT–NH 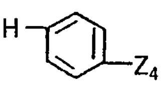 | 8- | 5- |
| 85 | 2-Sulfo-4-methyl-phenyl | do. | 8- | 5- |
| 86 | do. | –NH–CT–NH 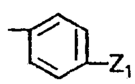 | 8- | 5- |
| 87 | 2,5-Disulfophenyl | do. | 8- | 5- |
| 88 | do. | –NH–CT–NH 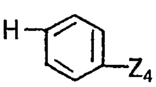 | 8- | 5- |
| 89 | 2,4-Disulfophenyl | do. | 8- | 5- |
| 90 | do. | –NH–CT–NH 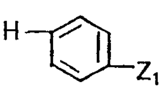 | 8- | 5- |
| 91 | 6,8-Disulfo-2-naphthyl | do. | 8- | 5- |
| 92 | do. | do. | 8- | 6- |
| 93 | do. | –NH–CT–NH 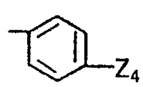 | 8- | 6- |
| 94 | do. | do. | 8- | 5- |
| 95 | 4-Sulfophenyl | do. | 8- | 5- |
| 96 | do. | –NH–CT–NH 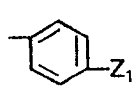 | 8- | 5- |

| Bsp. | D* | Formelglied R° | R° in . . . -St. | Sulfo in . . . -St. |
|---|---|---|---|---|
| 97 | 2-Sulfophenyl | –NH–CT–NH– 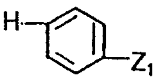 | 5- | kein Sulfo |
| 98 | do. | –NH–CT–NH – 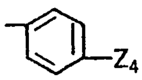 | 5- | kein Sulfo |
| 99 | 2,5-Disulfophenyl | –NH–CT–NH – 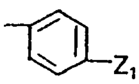 | 5- | do. |
| 100 | do. | –NH–CT–NH – 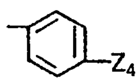 | 5- | do. |
| 101 | do. | –NH–CT–NH– 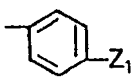 | 7- | do. |
| 102 | do. | –NH–CT–NH – 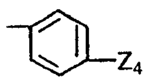 | 7- | do. |
| 103 | do. | –N –CT–NH –<br>$CH_3$ 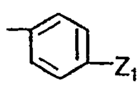 | 7- | do. |
| 104 | do. | –N –CT–NH –<br>$CH_3$ 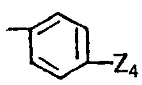 | 7- | do. |
| 105 | do. | –NH–CT–NH – 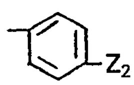 | 7- | do. |
| 106 | do. | –NH–CT–NH – 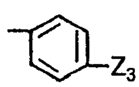 | 7- | do. |
| 107 | 2-Sulfophenyl | –NH–CT–NH – 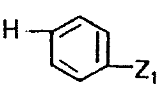 | 7- | do. |
| 108 | do. | –NH–CT–NH – 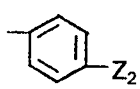 | 7- | do. |
| 109 | do. | –NH–CT–NH – 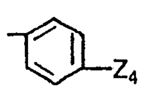 | 7- | do. |
| 110 | 2-Sulfo-4-methyl-phenyl | do. | 7- | do. |
| 111 | do. | –NH–CT–NH– 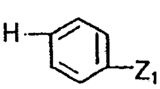 | 7- | do. |
| 112 | 4-Sulfo-1-naphthyl | do. | 7- | do. |
| 113 | 5-Sulfo-2-naphthyl | do. | 7- | do. |

| Bsp. | D* | Formelglied R° | R° in . . . -St. | Sulfo in . . . -St. |
|---|---|---|---|---|
| 114 | 4,8-Disulfo- 2-naphthyl | –NH–CT–NH– 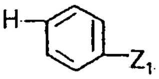 | 7- | kein Sulfo |
| 115 | 6,8-Disulfo- 2-naphthyl | do. | 7- | do. |
| 116 | 4-Sulfophenyl | do. | 7- | do. |
| 117 | 2-Sulfophenyl | do. | 5- | 7- |
| 118 | 2,5-Disulfo- phenyl | do. | 5- | 7- |
| 119 | 2,5-Disulfo- phenyl | –NH–CT–NH– 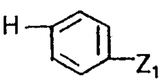 | 8- | kein Sulfo |
| 120 | 2-Sulfophenyl | do. | 8- | do. |
| 121 | do. | do. | 7- | 6- |
| 122 | 2,5-Disulfo- phenyl | do. | 7- | 6- |
| 123 | 2-Sulfo-4- methyl-phenyl | do. | 7- | 6- |
| 124 | 2-Sulfophenyl | do. | 6- | 7- |
| 125 | 2-Sulfo-4- methyl-phenyl | do. | 6- | 7- |
| 126 | 2,5-Disulfo- phenyl | do. | 6- | 7- |
| 127 | 2-Sulfophenyl | do. | 6- | kein Sulfo |
| 128 | do. | –NH–CT–NH– 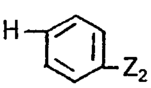 | 6- | do. |
| 129 | do. | –NH–CT–NH– 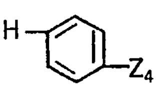 | 6- | do. |
| 130 | do. | –NH–CT–NH– 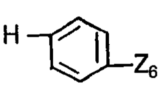 | 6- | do. |
| 131 | 2-Sulfo-4- methyl-phenyl | do. | 6- | do. |
| 123 | do. | –NH–CT–NH– 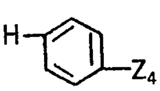 | 6- | do. |

| Bsp. | D* | Formelglied R⁰ | $R^0$ in . . . -St. | Sulfo in . . . -St. |
|---|---|---|---|---|
| 133 | 2-Sulfo-4-methyl-phenyl | –NH–CT–NH 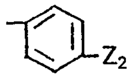 | 6- | kein Sulfo |
| 134 | do. | –NH–CT–NH 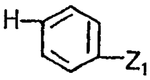 | 6- | do. |
| 135 | 2,5-Disulfophenyl | do. | 6- | do. |
| 136 | do. | –NH–CT–NH 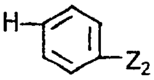 | 6- | do. |
| 137 | do. | –NH–CT–NH 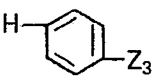 | 6- | do. |
| 138 | do. | –NH–CT–NH 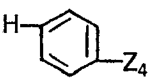 | 6- | do. |
| 139 | do. | –NH–CT–NH 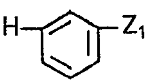 | 6- | do. |
| 140 | do. | –NH–CT–NH 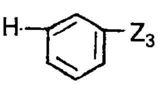 | 6- | do. |
| 141 | do. | –NH–CT–NH 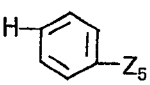 | 6- | do. |
| 142 | do. | –NH–CT–NH 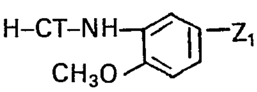 | 6- | do. |
| 143 | do. | –NH–CT–NH 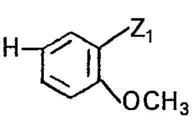 | 6- | do. |
| 144 | do. | –NH–CT–NH 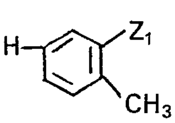 | 6- | do. |
| 145 | 2,5-Disulfo-4-methyl-phenyl | –NH–CT–NH 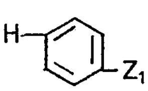 | 6- | do. |
| 146 | 2,4-Disulfophenyl | do. | 6- | do. |
| 147 | 4-Sulfophenyl | do. | 6- | do. |
| 148 | 3-Sulfophenyl | do. | 6- | do. |
| 149 | 3,6-Disulfo-1-naphthyl | do. | 6- | do. |

| Bsp. | D* | Formelglied R° | R° in . . . -St. | Sulfo in . . . -St. |
|---|---|---|---|---|
| 150 | 6,8-Disulfo-2-naphthyl | 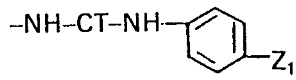 | 6- | kein Sulfo |
| 151 | 4,8-Disulfo-2-naphthyl | do. | 6- | do. |
| 152 | 5-Sulfo-2-naphthyl | do. | 6- | do. |
| 153 | 4-Sulfo-1-naphthyl | do. | 6- | do. |
| 154 | 4,6,8-Trisulfo-2-naphthyl | do. | 6- | do. |
| 155 | do. | 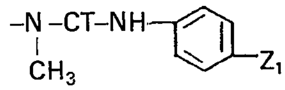 | 6- | do. |
| 156 | do. | 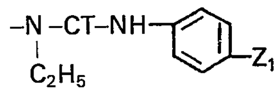 | 6- | do. |
| 157 | do. | 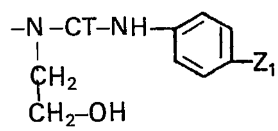 | 6- | do. |
| 158 | 4,8-Disulfo-2-naphthyl | 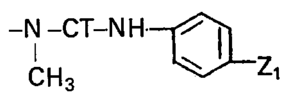 | 6- | do. |
| 159 | do. | 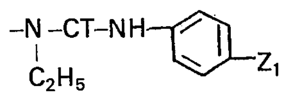 | 6- | do. |
| 160 | 4,8-Disulfo-2-naphthyl | 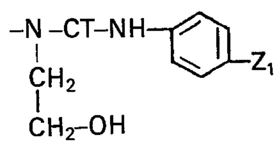 | 6- | do. |
| 161 | 6,8-Disulfo-2-naphthyl | 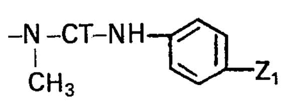 | 6- | do. |
| 162 | do. | 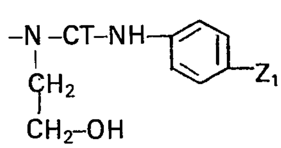 | 6- | do. |
| 163 | 2,5-Disulfophenyl | 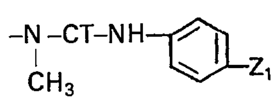 | 6- | do. |
| 164 | do. | 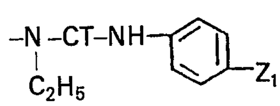 | 6- | do. |

| Bsp. | D* | Formelglied R° | R° in . . . -St. | Sulfo in . . . -St. |
|---|---|---|---|---|
| 165 | 2,5-Disulfophenyl | 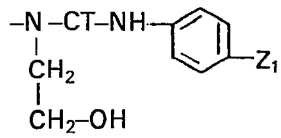 | 6- | kein Sulfo |
| 166 | 2-Sulfophenyl | do. | 6- | do. |
| 167 | do. | 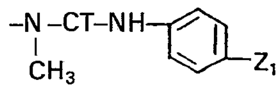 | 6- | do. |
| 168 | 2-Sulfo-4-methyl-phenyl | do. | 6- | do. |
| 169 | 2,5-Disulfo-4-methyl-phenyl | do. | 6- | do. |
| 170 | 4-Sulfophenyl | 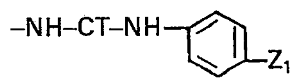 | 6- | 5- |
| 171 | 3-Sulfophenyl | do. | 6- | 5- |
| 172 | 2-Sulfophenyl | do. | 6- | 5- |
| 173 | do. | 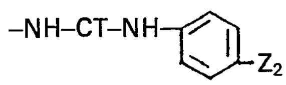 | 6- | 5- |
| 174 | do. | 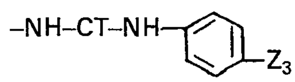 | 6- | 5- |
| 175 | do. | 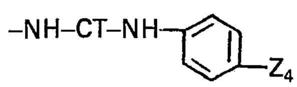 | 6- | 5- |
| 176 | do. | 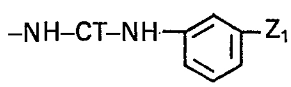 | 6- | 5- |
| 177 | do. | 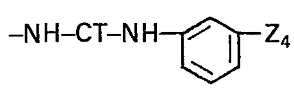 | 6- | 5- |
| 178 | do. | 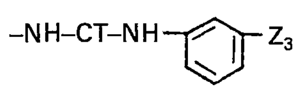 | 6- | 5- |
| 179 | do. | 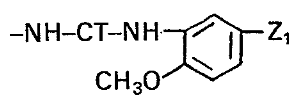 | 6- | 5- |
| 180 | 2-Sulfo-4-methyl-phenyl | 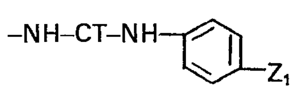 | 6- | 5- |
| 181 | do. | 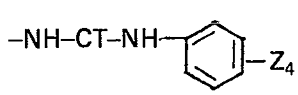 | 6- | 5- |

| Bsp. | D* | Formelglied R° | R° in . . . -St. | Sulfo in . . . -St. |
|---|---|---|---|---|
| 182 | 2-Sulfo-4-methyl-phenyl | –NH–CT–NH– 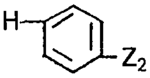 | 6- | 5- |
| 183 | 2,4-Disulfophenyl | do. | 6- | 5- |
| 184 | do. | –NH–CT–NH– 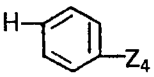 | 6- | 5- |
| 185 | do. | –NH–CT–NH– 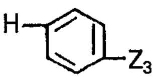 | 6- | 5- |
| 186 | do. | –NH–CT–NH– 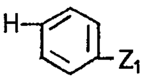 | 6- | 5- |
| 187 | do. | –NH–CT–NH– 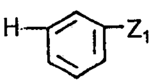 | 6- | 5- |
| 188 | 4-Sulfo-1-naphthyl | –NH–CT–NH– 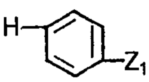 | 6- | 5- |
| 189 | 3,6-Disulfo-1-naphthyl | do. | 6- | 5- |
| 190 | 4,8-Disulfo-2-naphthyl | do. | 6- | 5- |
| 191 | 5-Sulfo-2-naphthyl | do. | 6- | 5- |
| 192 | 4,6,8-Trisulfo-2-naphthyl | do. | 6- | 5- |
| 193 | 1,5-Disulfo-2-naphthyl | do. | 6- | 5- |
| 194 | 6,8-Disulfo-2-naphthyl | do. | 6- | 5- |
| 195 | 3,6,8-Trisulfo-2-naphthyl | do. | 6- | 5- |
| 196 | 1-Sulfo-2-naphthyl | do. | 6- | 5- |
| 197 | 2-Carboxy-5-sulfophenyl | do. | 6- | 5- |
| 198 | do. | –NH–CT–NH– 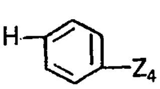 | 6- | 5- |
| 199 | do. | –NH–CT–NH– 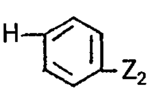 | 6- | 5- |

| Bsp. | D* | Formelglied R° | R° in . . . -St. | Sulfo in . . . -St. |
|---|---|---|---|---|
| 200 | 2-Sulfophenyl | –NH–CT–NH– 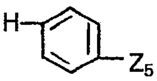 | 8- | 6- |
| 201 | 2,5-Dichlor-4-sulfophenyl | –NH–CT–NH– 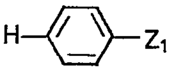 | 6- | 5- |
| 202 | do. | –NH–CT–NH– 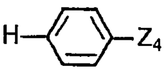 | 6- | 5- |
| 203 | do. | –NH–CT–NH– 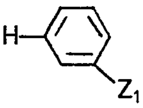 | 6- | 5- |
| 204 | do. | –NH–CT–NH– 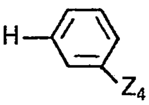 | 6- | 5- |
| 205 | 4-Acetylamino-2-sulfophenyl | –NH–CT–NH– 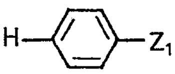 | 6- | 5- |
| 206 | do. | –NH–CT–NH– 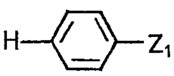 | 8- | 6- |
| 207 | do. | do. | 6- | kein Sulfo |
| 208 | do. | –NH–CT–NH– 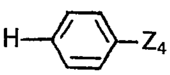 | 6- | 5- |
| 209 | do. | do. | 8- | 6- |
| 210 | do. | do. | 6- | kein Sulfo |
| 211 | do. | –NH–CT–NH– 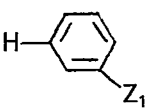 | 6- | 5- |
| 212 | do. | do. | 8- | 6- |
| 213 | do. | do. | 6- | kein Sulfo |
| 214 | do. | –NH–CT–NH– 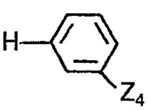 | 6- | 5- |
| 215 | do. | do. | 8- | 6- |
| 216 | 5-Acetylamino-2-sulfophenyl | –NH–CT–NH– 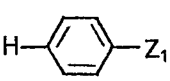 | 6- | 5- |
| 217 | do. | do. | 8- | 6- |
| 218 | do. | do. | 6- | kein Sulfo |

| Bsp. | D* | Formelglied R° | R° in . . . -Stellg. | Sulfo in . . . -Stellg. |
|---|---|---|---|---|
| 219 | 5-Acetylamino-2-sulfo-phenyl | –NH–CT–NH– 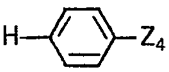 | 6- | 5- |
| 220 | do. | do. | 8- | 6- |
| 221 | do. | do. | 6- | kein Sulfo |
| 222 | do. | –NH–CT–NH– 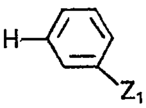 | 6- | 5- |
| 223 | do. | do. | 8- | 6- |
| 224 | do. | do. | 6- | kein Sulfo |
| 225 | do. | –NH–CT–NH– 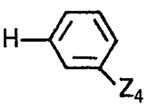 | 6- | 5- |
| 226 | do. | do. | 8- | 6- |
| 227 | 4-Benzoylamino-2-sulfophenyl | –NH–CT–NH– 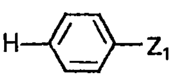 | 6- | 5- |
| 228 | do. | do. | 8- | 6- |
| 229 | do. | do. | 6- | kein Sulfo |
| 230 | do. | –NH–CT–NH– 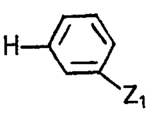 | 6- | 5- |
| 231 | do. | do. | 8- | 6- |
| 232 | do. | do. | 6- | kein Sulfo |
| 233 | do. | –NH–CT–NH– 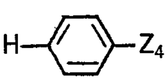 | 6- | 5- |
| 234 | do. | do. | 8- | 6- |
| 235 | 5-Benzoylamino-2-sulfo-phenyl | –NH–CT–NH– 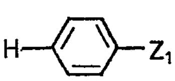 | 6- | 5- |
| 236 | do. | do. | 8- | 6- |

| Bsp. | D* | Formelglied R° | R° in . . . -St. | Sulfo in . . . -St. |
|---|---|---|---|---|
| 237 | 5-Benzoylamino-2-sulfo-phenyl | 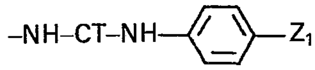 | 6- | kein Sulfo |
| 238 | do. | 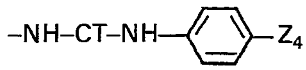 | 6- | 5- |
| 239 | do. | do. | 8- | 6- |
| 240 | do. | 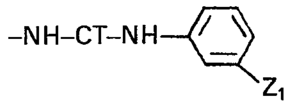 | 6- | 5- |
| 241 | do. | do. | 8- | 6- |
| 242 | do. | do. | 6- | kein Sulfo |
| 243 | 2,5-Dimethoxy-4-sulfo-phenyl | 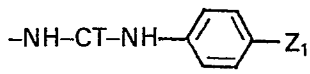 | 6- | 5- |
| 244 | do. | do. | 8- | 6- |
| 245 | do. | do. | 6- | kein Sulfo |
| 246 | do. | 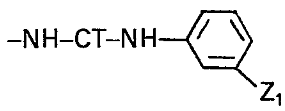 | 6- | 5- |
| 247 | do. | do. | 8- | 6- |
| 248 | do. | do. | 6- | kein Sulfo |
| 249 | do. | 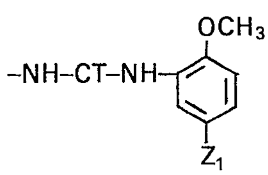 | 6- | 5- |
| 250 | do. | do. | 8- | 6- |
| 251 | do. | do. | 6- | kein Sulfo |
| 252 | do. | 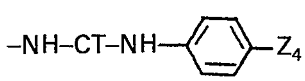 | 6- | 5- |
| 253 | do. | do. | 8- | 6- |
| 254 | do. | do. | 6- | kein Sulfo |

| Bsp. | D* | Formelglied R° | R° in . . . -St. | Sulfo in . . . -St. |
|---|---|---|---|---|
| 255 | 2,5-Dimethoxy-4-sulfo-phenyl | –NH–CT–NH– 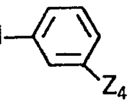 | 6- | 5- |
| 256 | do. | do. | 6- | 5- |
| 257 | 2-Methoxy-5-methyl-4-sulfophenyl | do. | 6- | 5- |
| 258 | do. | do. | 8- | 6- |
| 259 | do. | –NH–CT–NH– 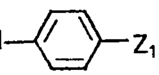 | 6- | 5- |
| 260 | do. | do. | 8- | 6- |
| 261 | do. | do. | 6- | kein Sulfo |
| 262 | do. | –NH–CT–NH– 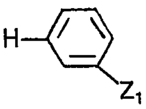 | 8- | 5- |
| 263 | do. | do. | 8- | 6- |
| 264 | do. | do. | 6- | kein Sulfo |
| 265 | do. | –NH–CT–NH– 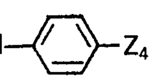 | 6- | 5- |
| 266 | do. | do. | 8- | 6- |

Anwendungsbeispiel 1

20 Teile der erfindungsgemässen Verbindung (als Natriumsalz) von Beispiel 1, 2, 3 oder 10 werden zusammen mit 50 Teilen Harnstoff in 300 Teilen Wasser gelöst. Die Lösung wird unterhalb von 40 °C in 400 Teilen einer neutralen, wässrigen 4%igen Alginatverdickung eingerührt. Man gibt 10 Teile Natriumcarbonat hinzu und füllt das Ganze mit der 4%igen wässrigen Alginatverdikkung auf eine Gesamtmenge von 1000 Teilen auf. Man rührt gut durch und bedruckt mit der so hergestellten Druckpaste ein Baumwollgewebe, das nach dem Trocknen bei 60 °C in einem handelsüblichen Dämpferaggregat 5 Minuten lang mit Sattdampf von 100 bis 103 °C behandelt wird. Der so hergestellte Druck wird anschliessend durch Spülen mit kaltem und heissem Wasser, durch Waschen mit einem neutralen Waschmittel und nochmaliges Spülen mit Wasser fertiggestellt. Nach dem Trocknen der Ware erhält man einen farbstarken marineblauen Druck von sehr guter Lichtechtheit und den guten im Beispiel 1 angegebenen Nassechtheitseigenschaften.

Anwendungsbeispiel 2

Ein Gewebe aus mercerisierter Baumwolle wird mit einer wässrigen Färbeflotte von 20 °C bei einer Flottenaufnahme von 80%, bezogen auf das Warengewicht, geklotzt, die im Liter 20 g des Natriumsalzes der erfindungsgemässen Verbindung von Beispiel 1, 2, 3 oder 10 sowie 18 g 33%ige Natronlauge enthält. Das geklotzte Gewebe wird auf eine Docke gewickelt, in eine Folie eingeschlagen und acht Stunden bei Raumtemperatur liegengelassen. Anschliessend wird es durch Spülen mit kaltem Wasser, durch Behandeln mit

einem wenig Essigsäure enthaltenden wässrigen Bad und durch nochmaliges Spülen in kaltem und heissem Wasser fertiggestellt. Nach dem Trocknen erhält man eine farbstarke marineblaue Färbung von sehr guter Lichtechtheit und den im Beispiel 1 genannten guten Nassechtheiten.

Anwendungsbeispiel 3

100 Teile eines Gewebes aus mercerisierter Baumwolle werden 10 Minuten lang bei 60 °C in 3000 Volumenteilen eines wässrigen Färbebades behandelt, das 5 Teile des Natriumsalzes der erfindungsgemässen Verbindung von Beispiel 1, 2, 3 oder 10 sowie 150 Teile wasserfreies Natriumsulfat enthält. Nach dieser 10-minütigen Behandlung werden 15 Teile wasserfreies Natriumcarbonat und 4 Teile 33%ige Natronlauge zugesetzt. Die Färbung wird 60 Minuten bei 60 °C weitergeführt. Anschliessend wird das gefärbte Gewebe in üblicher Weise, wie beispielsweise im Anwendungsbeispiel 2, fertiggestellt.

Man erhält eine farbstarke, marineblaue Färbung von sehr guter Lichtechtheit und den im Beispiel 1 genannten guten Nassechtheiten.

Anwendungsbeispiel 4

100 Teile eines Wollgewebes werden in ein 40 °C warmes wässriges Färbebad eingebracht, das aus 3000 Teilen Wasser, 2 Teilen des Natriumsalzes der im Beispiel 1 beschriebenen erfindungsgemässen Verbindung, 0,15 Teilen eines Anlagerungsproduktes von 12 Mol Äthylenoxid an 1 Mol Stearylamin, 2 Teilen Ammoniumacetat und 2 Teilen 60%iger wässriger Essigsäure besteht.

Die Färbetemperatur wird innerhalb von 30 Minuten auf Kochtemperatur erhöht und die Färbung anschliessend 60 Minuten lang bei 100 °C weitergeführt. Nach dem üblichen Auswaschen und Fertigstellen der erhaltenen Wollfärbung zeigt dieses Wollgewebe einen farbstarken, marineblauen Farbton von sehr guter Lichtechtheit und guten Nassechtheiten.

Anwendungsbeispiel 5

Man verfährt in der im Anwendungsbeispiel 4 angegebenen Färbeweise, ersetzt jedoch das Wollgewebe durch 100 Teile eines Gewebes aus einer Polycaprolactam-Faser. Man erhält ebenfalls eine farbstarke, marineblaue Färbung von guten Gebrauchsechtheiten.

Gemäss den obigen Anwendungsbeispielen lassen sich auch die anderen hier in den Ausführungsbeispielen und Tabellenbeispielen beschriebenen erfindungsgemässen Kupferkomplex-Disazoverbindungen in die Färbe- und Druckverfahren einsetzen; man erhält analog hierzu mit diesen erfindungsgemässen Kupferkomplex-Disazoverbindungen der Beispiele 4 bis 9 und 11 bis 265 ebenfalls sehr farbstarke Färbungen und Drucke von guten Licht- und Nassechtheitseigenschaften in marineblauen Farbtönen.

**Patentansprüche**

1. Wasserlösliche Kupferkomplex-Disazoverbindungen der allgemeinen Formel (1)

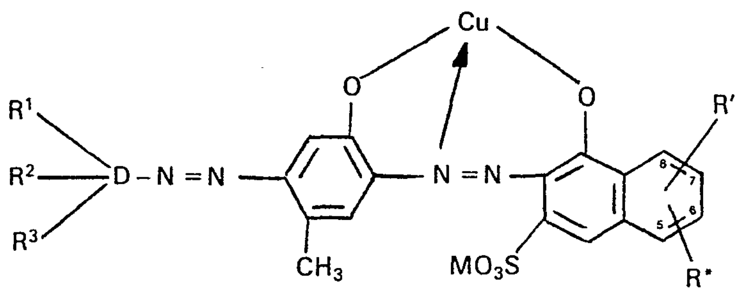
(1)

in welcher bedeuten:

D ist ein Benzolkern, dessen Substituenten

$R^1$ eine Sulfogruppe oder eine Carboxygruppe,

$R^2$ ein Wasserstoffatom, eine Sulfogruppe, eine Carboxygruppe, eine Alkylgruppe von 1 bis 4 C-Atomen, eine Alkoxygruppe von 1 bis 4 C-Atomen, ein Chloratom, ein Bromatom, eine Alkanoylaminogruppe von 2 bis 5 C-Atomen oder eine Benzoylaminogruppe und

$R^3$ Ein Wasserstoffatom, eine Alkylgruppe von 1 bis 4 C-Atomen, eine Alkoxygruppe von 1 bis 4 C-Atomen oder ein Chloratom darstellen, oder

D ist ein Naphthalinkern, dessen Substituenten

$R^1$ für eine Sulfogruppe und

$R^2$ und $R^3$ jedes für ein Wasserstoffatom oder eine Sulfogruppe stehen, wobei

$R^1$, $R^2$ und $R^3$ in allen Fällen zueinander gleiche oder voneinander verschiedene Bedeutungen besitzen können;

M ist ein Wasserstoffatom oder das Äquivalent eines Alkali- oder Erdalkalimetalls oder eines dreiwertigen Metalls der dritten Hauptgruppe;

R′ ist ein Wasserstoffatom oder eine Sulfogruppe, die in 5-, 6-, 7- oder 8-Stellung des Naphtholrestes gebunden sein kann;

$R^*$ ist eine in 5-, 6-, 7- oder 8-Stellung des Naphtholrestes gebundene Gruppe der allgemeinen Formel (2)

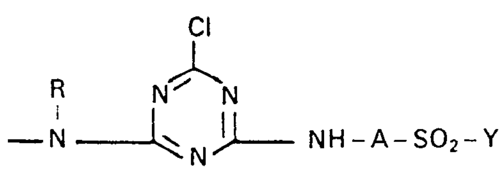
(2)

in welcher

R ein Wasserstoffatom oder eine Alkylgruppe von 1 bis 6 C-Atomen ist, die durch eine Hydroxygruppe, eine Sulfogruppe oder eine acylierte Hydroxygruppe substituiert sein kann,

A ein Phenylenrest ist, der durch einen oder zwei Substituenten aus der Gruppe Alkyl von 1 bis 4 C-Atomen, Alkoxy von 1 bis 4 C-Atomen, Chlor, Brom, Carboxy und Sulfo substituiert sein kann, oder ein Naphthylenrest ist, der durch eine Sulfogruppe substituiert sein kann, und

Y für die Vinylgruppe oder eine Gruppe der Formel $-CH_2-CH_2-Z$ steht, in welcher

Z einen alkalisch eliminierbaren Substituenten bedeutet, ausgenommen jedoch Verbindungen der allgemeinen Formel (1), in denen gleichzeitig D einen Benzolkern bedeutet und $R^1$ und $R^2$ beide para-ständig zueinander stehende Sulfogruppen sind und R' eine in 5-Stellung des Naphtholrestes befindliche Sulfogruppe und R* eine in 6-Stellung des Naphtholrestes befindliche Gruppe der allgemeinen Formel (2) bedeuten.

2. Kupferkomplex-Disazoverbindungen nach Anspruch 1, dadurch gekennzeichnet, dass D hier den Benzolkern bedeutet, dessen Substituenten $R^1$ eine Sulfogruppe oder eine Carboxygruppe, $R^2$ ein Wasserstoffatom, eine Methylgruppe, eine Methoxygruppe, ein Chloratom, eine Acetylaminogruppe oder eine Sulfogruppe und $R^3$ ein Wasserstoffatom, eine Methylgruppe, eine Methoxygruppe oder ein Chloratom bedeuten, wobei $R^1$, $R^2$ und $R^3$ zueinander gleich oder voneinander verschieden sein können.

3. Kupferkomplex-Disazoverbindungen nach Anspruch 1, dadurch gekennzeichnet, dass D hier einen Naphthalinkern darstellt, dessen Substituenten $R^1$ und $R^2$ jedes eine Sulfogruppe bedeuten und $R^3$ ein Wasserstoffatom ist.

4. Kupferkomplex-Disazoverbindungen nach Anspruch 1, 2 oder 3, dadurch gekennzeichnet, dass die Gruppe der allgemeinen Formel (2) hier in 6-Stellung des Naphtholrestes gebunden ist.

5. Kupferkomplex-Disazoverbindungen nach Anspruch, 1, 2 oder 3, dadurch gekennzeichnet, dass die Gruppe der allgemeinen Formel (2) hier in 8-Stellung des Naphtholrestes gebunden ist.

6. Kupferkomplex-Disazoverbindungen nach Anspruch 4, dadurch gekennzeichnet, dass der Substituent R' hier in 5-Stellung des Naphtholrestes gebunden ist und eine Sulfogruppe oder ein Wasserstoffatom bedeutet.

7. Kupferkomplex-Disazoverbindungen nach Anspruch 5, dadurch gekennzeichnet, dass der Substituent R' hier in 6-Stellung des Naphtholrestes gebunden ist und eine Sulfogruppe bedeutet.

8. Kupferkomplex-Disazoverbindungen nach Anspruch 1 der allgemeinen Formel

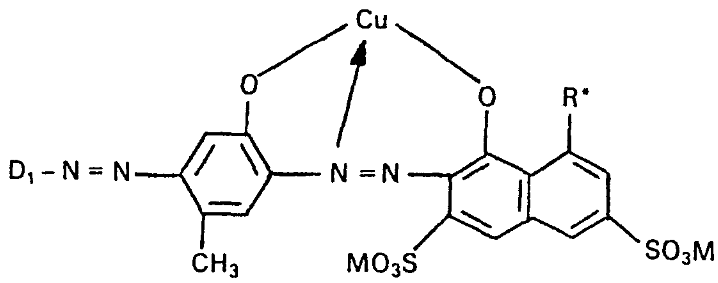

in welcher M und R* die in Anspruch 1 genannten Bedeutungen haben und $D_1$ für den Phenylrest steht, der durch eine Carboxygruppe oder eine Sulfogruppe substituiert ist oder der durch eine Sulfogruppe und eine Methyl-, Methoxy-, Carboxy- oder Acetylaminogruppe oder ein Chloratom substituiert ist, oder $D_1$ den 2,4-Disulfo-phenyl- oder den 3,5-Disulfophenyl- oder den 2,5-Disulfo-phenyl-Rest oder einen Disulfo-naphthyl- oder Trisulfo-naphthyl-Rest bedeutet.

9. Kupferkomplex-Disazoverbindungen nach Anspruch 1 der allgemeinen Formel

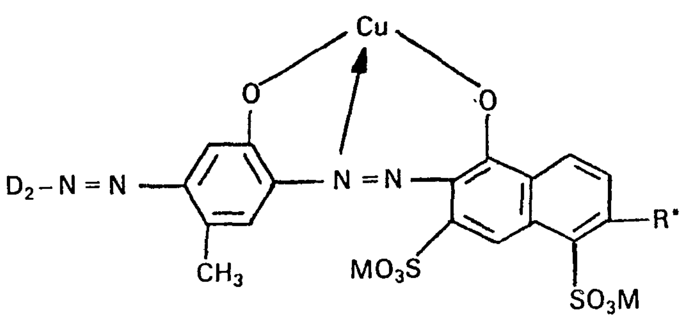

in welcher M und R* die in Anspruch 1 genannten Bedeutungen haben und $D_2$ den Phenylrest darstellt, der durch eine Carboxygruppe oder eine Sulfogruppe substituiert ist oder der durch eine Sulfogruppe und eine Methyl-, Methoxy-, Carboxy- oder Acetylaminogruppe oder ein Chloratom substituiert ist, oder $D_2$ einen Disulfonaphthyl- oder Trisulfonaphthyl- oder den 2,4-Disulfophenyl- oder den 3,5-Disulfo-phenyl-Rest bedeutet.

10. Kupferkomplex-Disazoverbindungen nach Anspruch 1 der allgemeinen Formel

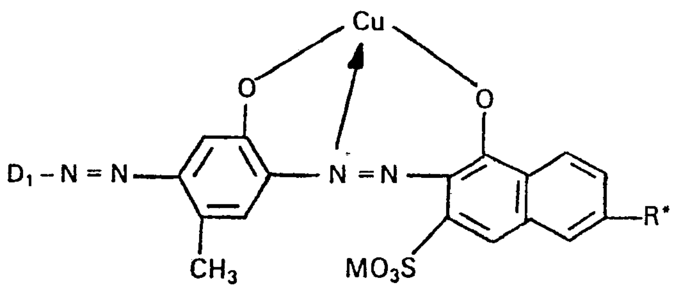

in welcher M und R* die in Anspruch 1 genannten Bedeutungen haben und $D_1$ für den Phenylrest steht, der durch eine Carboxygruppe oder eine Sulfogruppe substituiert ist oder der durch eine Sulfogruppe und eine Methyl-, Methoxy-, Carboxy- oder Acetylaminogruppe oder ein Chloratom substituiert ist, oder $D_1$ den 2,4-Disulfo-phenyl- oder den 3,5-Disulfophenyl- oder den 2,5-Disulfo-phenyl-Rest oder einen Disulfo-naphthyl- oder Trisulfo-naphthyl-Rest bedeutet.

11. Kupferkomplex-Disazoverbindungen nach einem der Ansprüche 1 bis 10, dadurch gekennzeichnet, dass Y hier für die Vinylgruppe oder für eine β-Sulfatoäthyl-Gruppe steht.

12. Kupferkomplex-Disazoverbindungen nach einem der Ansprüche 1 bis 11, dadurch gekennzeichnet, dass M hier Wasserstoff, Natrium oder Kalium bedeutet.

13. Verfahren zur Herstellung der Kupferkomplex-Disazoverbindungen von Anspruch 1, dadurch gekennzeichnet, dass man 2,4,6-Trichlor-1,3,5-triazin in beliebiger Reihenfolge mit einer aromatischen Aminoverbindung der allgemeinen Formel (3)

$$H_2N\text{–}A\text{–}SO_2\text{–}Y \qquad (3)$$

in welcher A und Y die in Anspruch 1 angegebenen Bedeutungen haben, und mit einer Amino-Disazoverbindung der allgemeinen Formel (4)

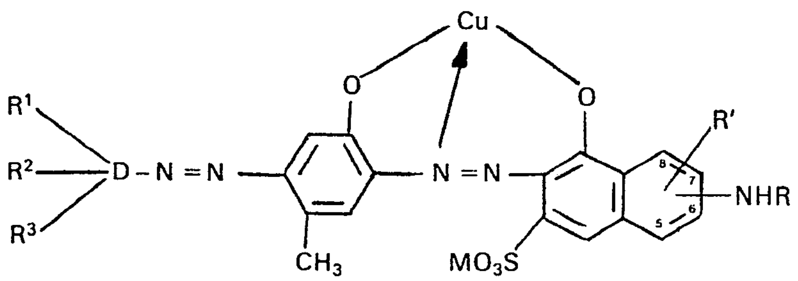 (4)

in welcher D, $R^1$, $R^2$, $R^3$, R′, R und M die in Anspruch 1 genannten Bedeutungen besitzen, ausgenommen mit Verbindungen der allgemeinen Formel (4), in welcher gleichzeitig D einen Benzolkern bedeutet und $R^1$ und $R^2$ beide zueinander para-ständig stehende Sulfogruppen und R′ eine in 5-Stellung des Naphtholrestes befindliche Sulfogruppe darstellen und die Aminogruppe –NHR in 6-Stellung des Naphtholrestes gebunden ist, umsetzt oder dass man eine Disazoverbindung der allgemeinen Formel (5)

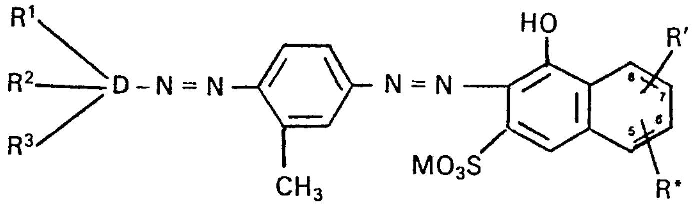 (5)

in welcher D, $R^1$, $R^2$, $R^3$, R′, R* und M die in Anspruch 1 genannten Bedeutungen haben, ausgenommen jedoch Disazoverbindungen der allgemeinen Formel (5), in welchen gleichzeitig D einen Benzolkern, $R^1$ und $R^2$ beide zueinander para-ständige Sulfogruppen, R′ eine in 5-Stellung des Naphtholrestes befindliche Sulfogruppe und R* eine in 6-Stellung befindliche Gruppe der allgemeinen Formel (2) bedeuten, mit einer kupferabgebenden Verbindung in Gegenwart eines oxidierend wirkenden Mittels umsetzt.

14. Verwendung der in Anspruch 1 definierten Kupferkomplex-Disazoverbindungen als Farbstoffe.

15. Verwendung nach Anspruch 14 zum Färben oder Bedrucken von hydroxy- und/oder carbonamidgruppenhaltigem Material, insbesondere Fasermaterial.

## Revendications

1. Composés disazoïques à complexe de cuivre solubles dans l'eau, de formule générale (1)

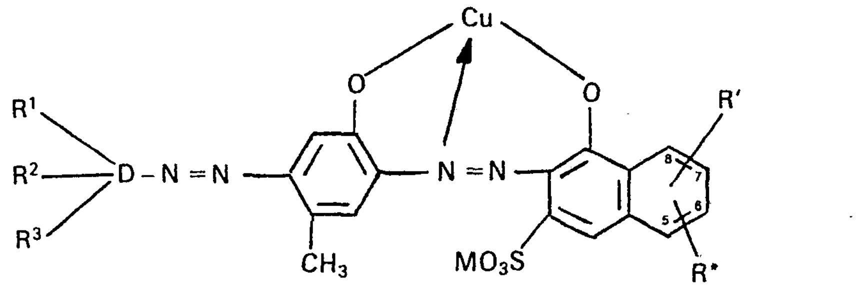

(1)

dans laquelle

D est un noyau benzénique, dont les substituants ont les significations suivantes:

$R^1$ est un groupe sulfo ou un groupe carboxy,

$R^2$ est un atome d'hydrogène, un groupe sulfo, un groupe carboxy, un groupe alkyle ayant de 1 à 4 atomes de carbone, un groupe alcoxy ayant de 1 à 4 atomes de carbone, un atome de chlore, un atome de brome, un groupe alcanoylamino ayant de 2 à 5 atomes de carbone ou un groupe benzoylamino, et

$R^3$ est un atome d'hydrogène, un groupe alkyle ayant de 1 à 4 atomes de carbone, un groupe alcoxy ayant de 1 à 4 atomes de carbone ou un atome de chlore, ou bien

D est un noyau naphtalène, dont les substituants ont les significations suivantes:

$R^1$ est un groupe sulfo, et

$R^2$ et $R^3$ sont chacun un atome d'hydrogène ou un groupe sulfo,

$R^1$, $R^2$ et $R^3$ pouvant, dans tous les cas, avoir des significations identiques les unes aux autres ou différentes les unes des autres;

M est un atome d'hydrogène ou l'équivalent d'un métal alcalin ou alcalino-terreux, ou d'un métal trivalent du troisième groupe pricipal;

R' est un atome d'hydrogène ou un groupe sulfo, qui peut être fixé en position 5, 6, 7 ou 8 du radical hydroxynaphthyle;

$R^*$ est un groupe fixé en position 5, 6, 7 ou 8 du radical hydroxynaphtyle, de formule générale (2)

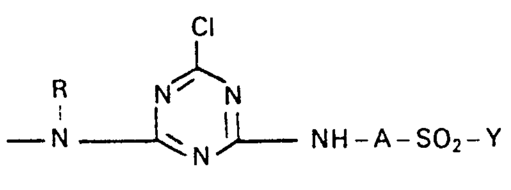

(2)

dans laquelle

R est un atome d'hydrogène ou un groupe alkyle ayant de 1 à 6 atomes de carbone, et qui peut être substitué par un groupe hydroxy, un groupe sulfo ou un groupe hydroxyacylé,

A est un radical phénylène, lequel peut être substitué par un ou deux substituants du groupe comprenant les radicaux alkyle ayant de 1 à 4 atomes de carbone, alcoxy ayant de 1 à 4 atomes de carbone, chloro, bromo, carboxy et sulfo, ou bien est un radical naphtylène pouvant être substitué par un groupe sulfo, et

Y est le groupe vinyle ou un groupe de formule $-CH_2-CH_2-Z$, dans laquelle

Z est un substituant éliminable par voie alcaline, à l'exception toutefois des composés de formule générale (1) dans laquelle simultanément D est un noyau benzénique, et $R^1$ et $R^2$ sont tous les deux des groupes sulfo en position para l'un par rapport à l'autre, et R' est un groupe sulfo se trouvant en position 5 du radical hydroxynaphtyle, et $R^*$ est un groupe de formule générale (2) se trouvant en position 6 du radical hydroxynaphtyle.

2. Composés disazoïques à complexe de cuivre selon la revendication 1, caractérisés en ce que D désigne ici le noyau benzénique, dont les substituants sont les suivants: $R^1$ désigne un groupe sulfo ou un groupe carboxy, $R^2$ désigne un atome d'hydrogène, un groupe méthyle, un groupe méthoxy, un atome de chlore, un groupe acétylamino ou un groupe sulfo, et $R^3$ désigne un atome d'hydrogène, un groupe méthyle, un groupe méthoxy ou un atome de chlore, $R^1$, $R^2$ et $R^3$ pouvant être identiques les uns aux autres ou différents les uns des autres.

3. Composés disazoïques à complexe de cuivre selon la revendication 1, caractérisés en ce que D représente ici un noyau naphtalène dont les substituants $R^1$ et $R^2$ sont chacun un groupe sulfo et $R^3$ est un atome d'hydrogène.

4. Composés disazoïques à complexe de cuivre selon la revendication 1, 2 ou 3, caractérisés en ce que le groupe de formule générale (2) est ici fixé en position 6 du radical hydroxynaphtyle.

5. Composés disazoïques à complexe de cuivre selon la revendication 1, 2 ou 3, caractérisés en ce que le groupe de formule générale (2) est ici fixé en position 8 du radical hydroxynaphtyle.

6. Composés disazoïques à complexe de cuivre selon la revendication 4, caractérisés en ce que le substituant R' est ici fixé en position 5 du radical hydroxynaphtyle et représente un groupe sulfo ou un atome d'hydrogène.

7. Composés disazoïques à complexe de cuivre selon la revendication 5, caractérisés en ce que le substituant R' est ici fixé en position 6 du radical hydroxynaphtyle et représente un groupe sulfo.

8. Composés disazoïques à complexe de cuivre selon la revendication 1, de formule générale

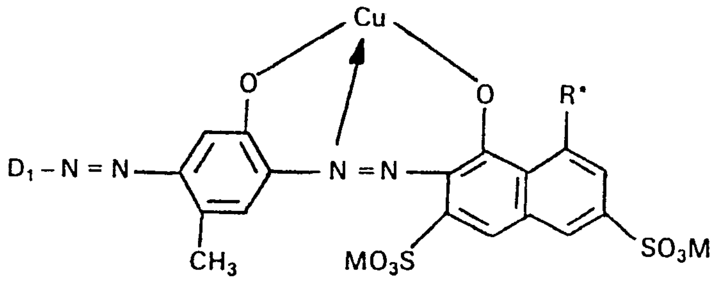

dans laquelle M et $R^{\bullet}$ ont les significations données dans la revendication 1 et $D_1$ représente le radical phényle, lequel est substitué par un groupe carboxy ou un groupe sulfo ou est substitué par un groupe sulfo et un groupe méthyle, méthoxy, carboxy ou acétylamino, ou par un atome de chlore, ou bien $D_1$ représente le radical disulfo-2,4 phényle ou le radical disulfo-3,5 phényle ou le radical disulfo-2,5 phényle, ou représente un radical disulfonaphtyle ou trisulfonaphtyle.

9. Composés disazoïques à complexe de cuivre selon la revendication 1, de formule générale

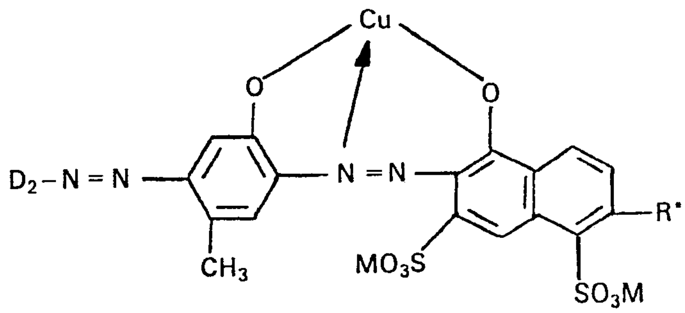

dans laquelle M et $R^{\bullet}$ ont les significations données dans la revendication 1 et $D_2$ représente le radical phényle, lequel est substitué par un groupe carboxy ou un groupe sulfo, ou est substitué par un groupe sulfo et un groupe méthyle, méthoxy, carboxy ou acétylamino ou par un atome de chlore, ou bien $D_2$ représente un radical disulfonaphtyle ou trisulfonaphtyle, ou le radical disulfo-2,4 phényle ou le radical disulfo-3,5 phényle.

10. Composés disazoïques à complexe de cuivre selon la revendication 1, de formule générale

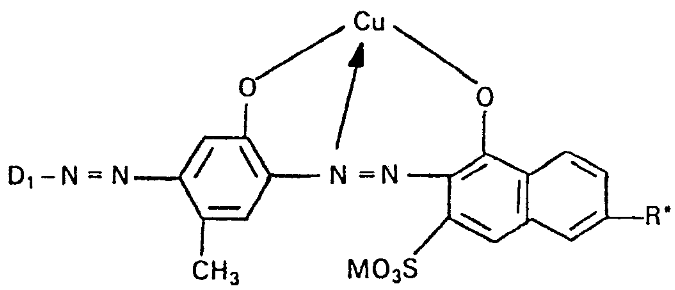

dans laquelle M et $R^{\bullet}$ ont les significations données dans la revendication 1, et $D_1$ représente le radical phényle, lequel est substitué par un groupe carboxy ou un groupe sulfo, ou est substitué par un groupe sulfo et un groupe méthyle, méthoxy, carboxy ou acétylamino ou par un atome de chlore, ou bien $D_1$ représente le radical disulfo-2,4 phényle ou le radical disulfo-3,5 phényle ou le radical disulfo-2,5 phényle ou un radical disulfonaphtyle ou trisulfonaphtyle.

11. Composés disazoïques à complexe de cuivre selon l'une des revendications 1 à 10, caractérisés en ce que Y représente ici le groupe vinyle ou un groupe sulfato-2 éthyle.

12. Composés disazoïques à complexe de cuivre selon l'une des revendications 1 à 11, caractérisés en ce que M est ici l'hydrogène, le sodium ou le potassium.

13. Procédé pour la préparation de composés disazoïques à complexe de cuivre selon la revendication 1, caractérisé en ce qu'on fait réagir de la trichloro-2,4,6- triazine-1,3,5, dans un ordre quelconque, sur un composé aminé aromatique de formule générale (3)

$$H_2N\text{-}A\text{-}SO_2\text{-}Y \qquad (3)$$

dans laquelle A et Y ont les significations données dans la revendication 1, et sur un composé aminodisazoïque de formule générale (4)

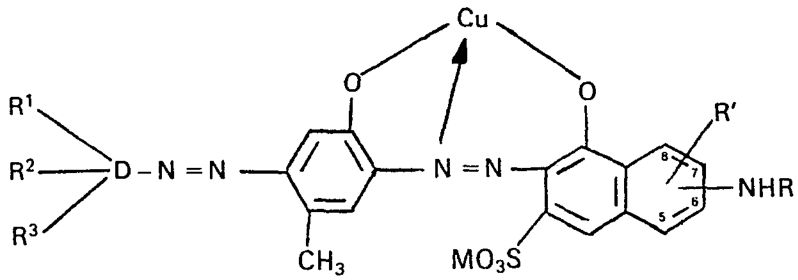

(4)

dans laquelle D, $R^1$, $R^2$, $R^3$, R', R et M ont les significations données dans la revendication 1, à l'exception des composés de formule générale (4) dans laquelle simultanément D désigne un noyau benzénique, et $R^1$ et $R^2$ sont tous les deux des groupes sulfo en position para l'un par rapport à l'autre, et R' est un groupe sulfo en position 5 du radical hydroxynaphtyle, et le groupe amino –NHR est fixé en position 6 du radical hydroxynaphtyle, ou bien qu'on fait réagir un composé disazoïque de formule générale (5)

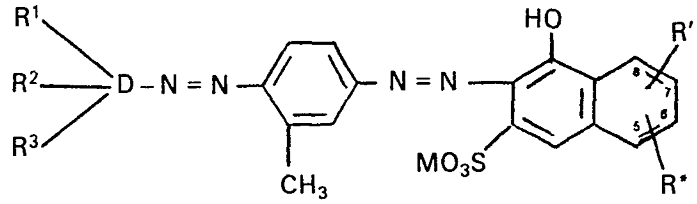

(5)

dans laquelle D, $R^1$, $R^2$, $R^3$, R', $R^*$ et M ont les significations données dans la revendication 1, à l'exception toutefois des composés disazoïques de formule générale (5), dans laquelle simultanément D est un noyau benzénique, $R^1$ et $R^2$ sont tous les deux des groupes sulfo en position para l'un par rapport à l'autre, R' est un groupe sulfo en position 5 du radical hydroxynaphtyle et $R^*$ est un groupe en position 6, de formule générale (2), sur un composé cédant du cuivre, en présence d'un produit à effet oxydant.

14. Utilisation en tant que colorants des composés disazoïques à complexe de cuivre définis dans la revendication 1.

15. Utilisation selon la revendication 14 pour la teinture ou l'impression de matières contenant des groupes hydroxy et/ou carboxamides, en particulier des matières fibreuses.

**Claims**

1. Water-soluble copper-complex disazo compounds of the general formula (1)

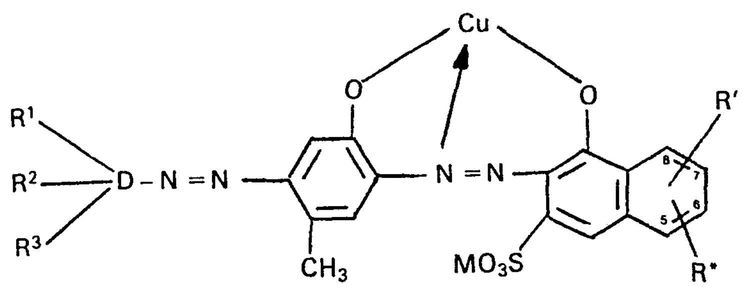

(1)

in which:

D is a benzene nucleus in which the substituent

$R^1$ represents a sulfo group or a carboxy group,

$R^2$ represents a hydrogen atom, a sulfo group, a carboxy group, an alkyl group of 1 to 4 C-atoms, an alkoxy group of 1 to 4 C-atoms, a chlorine atom, a bromine atom, an alkanoylamino group of 2 to 5 C-atoms or a benzoylamino group and

$R^3$ represents a hydrogen atom, an alkyl group of 1 to 4 C-atoms, an alkoxy group of 1 to 4 C-atoms or a chlorine atom, or

D is a naphthalene nucleus in which the substituent

$R^1$ represents a sulfo group and

$R^2$ and $R^3$ each represent a hydrogen atom or a sulfo group,

it being possible for $R^1$, $R^2$ and $R^3$ in all cases to have meanings which are identical with one another or different from one another;

M is a hydrogen atom or the equivalent of an alkali or alkaline earth metal or of a trivalent metal of the third main group;

R' is a hydrogen atom or a sulfo group which can be attached in the 5-, 6-, 7- or 8-position of the naphthol radical;

$R^*$ is a group of the general formula (2)

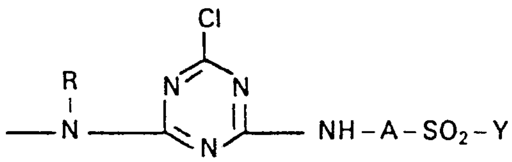

(2)

which is attached in the 5-, 6-, 7- or 8-position of the naphthol radical and in which

R is a hydrogen atom or an alkyl group fo 1 to 6 C-atoms which can be substituted by a hydroxy group, a sulfo group or an acylated hydroxy group,

A is a phenylene radical which can be substituted by one or two substituents belonging to the group comprising alkyl of 1 to 4 C-atoms, alkoxy of 1 to 4 C-atoms, chlorine, bromine, carboxy and sulfo, or is a naphthylene radical which can be substituted by a sulfo group, and

Y represents the vinyl group or a group of the formula $-CH_2-CH_2-Z$ in which

Z denotes a substituent which can be eliminated under alkaline conditions, but disclaimed are compounds of the general formula (1) in which, at the same time, D denotes a benzene nucleus and $R^1$ and $R^2$ are both sulfo groups located in the para-position relative to one another and R' denotes a sulfo group located in the 5-position of the naphthol radical and R* denotes a group of the general formula (2) located in the 6-position of the naphthol radical.

2. Copper complex-disazo compounds according to claim 1, characterized by that D denotes the benzene nucleus in which the substituent $R^1$ denotes a sulfo group or a carboxy group, the substituent $R^2$ denotes a hydrogen atom, a methyl group, a methoxy group, a chlorine atom, an acetylamino group or a sulfo group and the substituent $R^3$ denotes a hydrogen atom, a methyl group, a methoxy group or a chlorine atom, it being possible for $R^1$, $R^2$ and $R^3$ to be identical with one another or different from one another.

3. Copper complex-disazo compounds according to claim 1, characterized by that D represents a naphthalene nucleus in which each of the substituents $R^1$ and $R^2$ denotes a sulfo group and $R^3$ is a hydrogen atom.

4. Copper complex-disazo compounds according to claim 1, 2 or 3, characterized by that the group of the general formula (2) is attached in the 6-position of the naphthol radical.

5. Copper complex-disazo compounds according to claim 1, 2 or 3, characterized by that the group of the general formula (2) is attached in the 8-position of the naphthol radical.

6. Copper complex-disazo compounds according to claim 4, characterized by that the substituent R' is attached in the 5-position of the naphthol radical and denotes a sulfo group or a hydrogen atom.

7. Copper complex-disazo compounds according to claim 5, characterized by that the substituent R' is attached in the 6-position of the naphthol radical and denotes a sulfo group.

8. Copper complex-disazo compounds according to claim 1, of the general formula

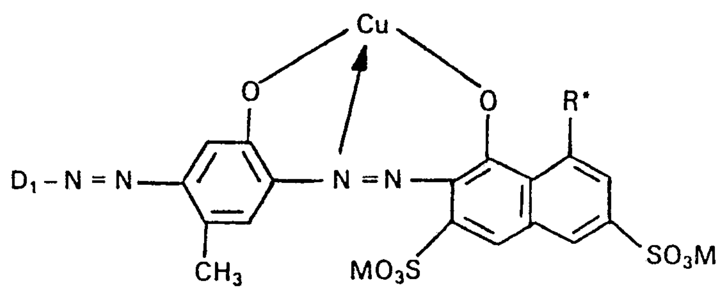

in which M and R* have the meanings mentioned in claim 1 and $D_1$ represents the phenyl radical which can be substituted by a carboxy group or a sulfo group or which is substituted by a sulfo group and a methyl, methoxy, carboxy or acetylamino group or a chlorine atom, or $D_1$ denotes the 2,4-disulfophenyl radical or the 3,5-disulfophenyl radical or the 2,5-disulfophenyl radical or a disulfonaphthyl or trisulfonaphthyl radical.

9. Copper complex-disazo compounds according to claim 1, of the general formula

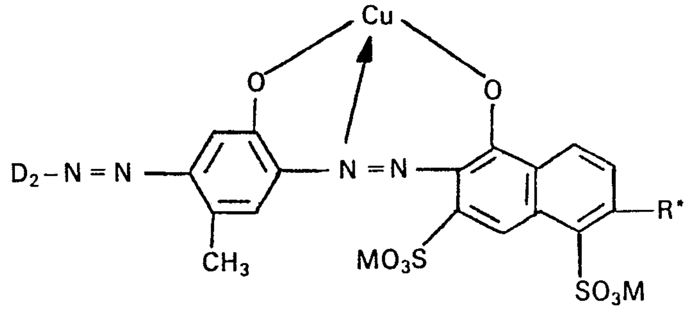

in which M and R* have the meanings mentioned in claim 1 and $D_2$ represents the phenyl radical which is substituted by a carboxy group or a sulfo group or which is substituted by a sulfo group and a methyl, methoxy, carboxy or acetylamino group or a chlorine atom, or $D_2$ denotes a disulfonaphthyl or trisulfonaphthyl radical or the 2,4-disulfophenyl radical or the 3,5-disulfophenyl radical.

10. Copper complex-disazo compounds according to claim 1, of the general formula

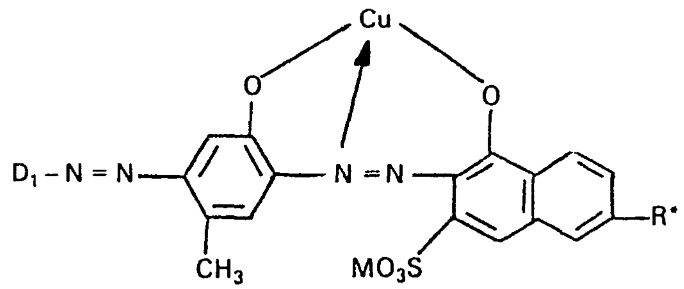

in which M and R* have the meanings mentioned in claim 1 and $D_1$ represents the phenyl radical which is substituted by a carboxy group or a sulfo group or which is substituted by a sulfo group and a methyl, methoxy, carboxy or acetylamino group or a chlorine atom, or $D_1$ denotes the 2,4-disulfophenyl radical or the 3,5-disulfophenyl radical or the 2,5-disulfophenyl radical or a disulfonaphthyl or trisulfonaphthyl radical.

11. Copper complex-disazo compounds according to any of claims 1 to 10, characterized by that Y represents the vinyl group or a β-sulfatoethyl group.

12. Copper complex-disazo compounds according to any of claims 1 to 11, characterized by that M denotes hydrogen, sodium or potassium.

13. Process for the preparation of the copper-complex disazo compounds of claim 1, characterized by that 2,4,6-trichloro-1,3,5- triazine is reacted in any desired sequence with an aromatic amino compound of the general formula (3)

$$H_2N\text{-}A\text{-}SO_2\text{-}Y \quad (3)$$

in which A and Y have the meanings indicated in claim 1, and with an amino-disazo compound of the general formula (4)

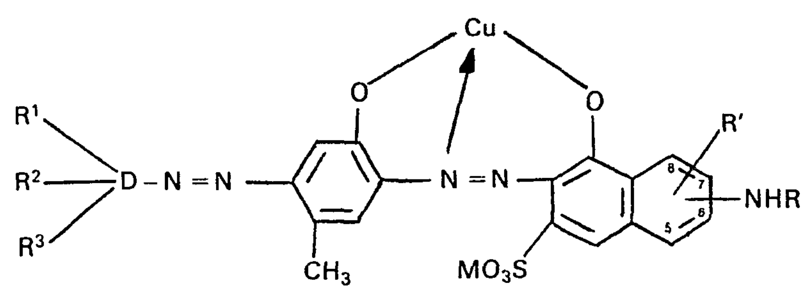

(4)

in which D, $R^1$, $R^2$, $R^3$, R', R and M are defined as in claim 1, except using compounds of the general formula (4) in which, at the same time, D denotes a benzene nucleus and $R^1$ and $R^2$ both represents sulfo groups located in the para-position relative to one another and R' represents a sulfo group located in the 5-position of the naphthol radical and the amino group –NHR is located in the 6-position of the naphthol radical, or that a disazo compound of the general formula (5)

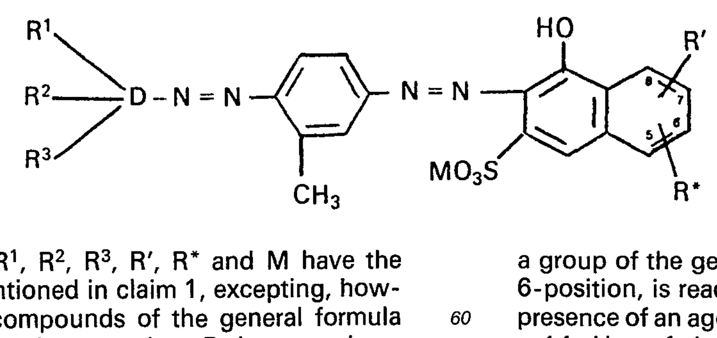

(5)

in which D, $R^1$, $R^2$, $R^3$, R', R* and M have the meanings mentioned in claim 1, excepting, however, disazo compounds of the general formula (5) in which, at the same time, D denotes a benzene nucleus, $R^1$ and $R^2$ both denotes sulfo groups located in the para-position relative to one another, R' denotes a sulfo group located in the 5-position of the naphthol radical and R* denotes a group of the general formula (2) located in the 6-position, is reacted with a copper donor in the presence of an agent having an oxidizing action.

14. Use of the copper-complex disazo compounds defined in claim 1, as dyestuffs.

15. Use according to claim 14 for dyeing or printing material, in particular fiber material, containing hydroxy and/or carboxamide groups.